# EUROPEAN PATENT APPLICATION

(11) **EP 3 376 807 A1**
(43) Date of publication of application: **19.09.2018**
(21) Application number: 17188684.9
(22) Date of filing: 31.08.2017
(51) Int. Cl.: H04W 52/24, H04W 52/26, H04W 52/50, H04W 52/28, H04L 5/14, H04W 52/14, H04W 52/36

(54) **WIRELESS COMMUNICATION DEVICE AND WIRELESS COMMUNICATION METHOD**

(30) Priority: 13.03.2017 JP 2017047557
(71) Applicant: Kabushiki Kaisha Toshiba, Minato-ku, Tokyo (JP)
(72) Inventor: Nabetani, Toshihisa, Minato-ku, Tokyo (JP); Ogawa, Toshiyuki, Minato-ku, Tokyo (JP)
(74) Representative: Noble, Nicholas

(57) **Abstract**

According to one embodiment, a wireless communication device includes a receiver and a transmitter. The receiver is configured to receive a first packet including a first information and, after reception of the first packet, receive a second packet in a predetermined frequency band. The transmitter is configured to transmit a third packet in the predetermined frequency band simultaneously with reception of the second packet with a transmission power equal to or less than a maximum transmission power based on the first information.

## Description

### FIELD

Approach described herein relate to a wireless communication device and a wireless communication method.

### BACKGROUND

As a technique for improving system throughputs in an environment where numerous terminals exist, the technique of full-duplex communications has been investigated. In full-duplex communications, one terminal simultaneously carries out transmission and reception using the same frequency, so that it is possible to increase the efficiency of utilization of time resources when compared with conventional half-duplex communications. Specifically, increase in the throughput can be expected by up to double.

A problem associated with full-duplex communications is that a signal to be transmitted may enter the receiver's side in a roundabout manner via a certain path in the terminal itself that transmits the signal, causing self-interference with respect to a signal to be received. In general, a signal to be transmitted is transmitted at a large level relative to that of a signal to be received which is received in an attenuated state. As a result, the self-interference level due to introduction of unwanted signal is relatively large when compared with the level of the signal to be received. As a result, the signal to be received is likely not received correctly due to the self-interference acting as the factor. Here, receiving correctly in this context means, for example, that a signal is received with a reception quality (signal-to-interference-plus-noise ratio (SINR), etc.) ensuring that the signal can be received at or below a certain frame error rate.

### BRIEF DESCRIPTION OF THE DRAWINGS

FIG. 1 is a diagram illustrating a wireless communication system according to this approach;
FIG. 2A is a diagram illustrating a configuration example of a physical packet;
FIG. 2B is a diagram illustrating a configuration example of a physical packet;
FIG. 3A is a diagram illustrating a format example of a MAC frame;
FIG. 3B is a diagram illustrating a format example of a MAC header;
FIG. 4 is a block diagram illustrating a configuration example of a terminal according to this approach;
FIG. 5 is a diagram illustrating a format example of an FD-RTS frame;
FIG. 6 is a block diagram illustrating a configuration example of an access point according to this approach;
FIG. 7 is a diagram schematically illustrating an example of a self-interference signal which is a signal that enters a receiver in a roundabout manner from a transmitter;
FIG. 8 is a diagram illustrating an operation example according to a first approach;
FIG. 9 is a diagram illustrating an example table of MCS and required SINR;
FIG. 10 is a diagram illustrating an example of a process flow in an access point according to the first approach;
FIG. 11 is a diagram illustrating an example of a process flow in a terminal according to the first approach;
FIG. 12 is a diagram illustrating an example format of a trigger frame;
FIG. 13 is a diagram illustrating an operation example according to a second approach;
FIG. 14 is a diagram illustrating an example of a process flow in an access point according to the second approach;
FIG. 15 is a diagram illustrating an example of a process flow in the access point according to the second approach;
FIG. 16 is a diagram illustrating an example of a process flow in a terminal according to the second approach;
FIG. 17 is a functional block diagram of the access point or the terminal;
FIG. 18 is a diagram illustrating an example of an overall configuration of the terminal or the access point;
FIG. 19 is a diagram illustrating a hardware configuration example of a wireless communication device incorporated in the terminal or the access point;
FIG. 20 is a functional block diagram of the terminal or the access point;
FIG. 21A and 21B each shows a perspective view of a terminal according to approach of the present invention;
FIG. 22 is a diagram illustrating a memory card according to approach of the present invention; and
FIG. 23 is a diagram illustrating an example of frame exchange in a contention period.

### DETAILED DESCRIPTION

According to one embodiment, a wireless communication device includes a receiver and a transmitter. The receiver is configured to receive a first packet including a first information and, after reception of the first packet, receive a second packet in a predetermined frequency band. The transmitter is configured to transmit a third packet in the predetermined frequency band simultaneously with reception of the second packet with a transmission power equal to or less than a maximum transmission power based on the first information.

Embodiments of the present invention will be described below with reference to the drawings.

### (First Embodiment)

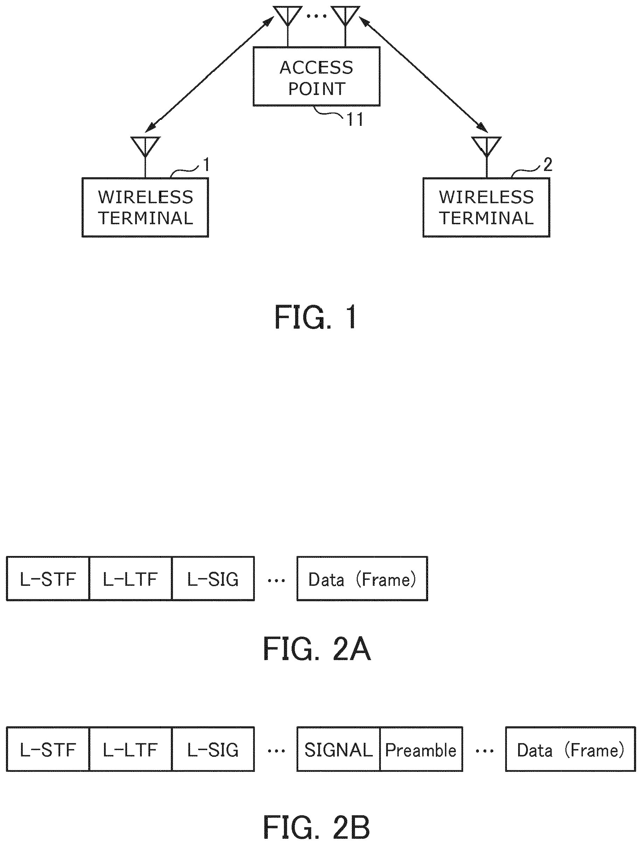

FIG. 1 illustrates a wireless communication system according to this embodiment. The wireless communication system is a wireless local area network (LAN) that includes a base station (hereinafter referred to as "access point (AP) 11") and a plurality of wireless terminals (hereinafter referred to as "terminal 1" and "terminal 2").

The access point 11 is also a terminal in one mode of implementation but differs from the terminals 1 and 2 in that the access point 11 has a relay function or the like. Although it is assumed here that the access point 11, the terminals 1 and 2 perform communications according to the IEEE 802.11 standard, communications may be performed according to other communication schemes. The access point 11 includes one or more antennas. For the sake of simplicity, only two wireless terminals (terminals 1 and 2) are illustrated in FIG. 1, but more terminals may exist in the network.

The access point 11 is equipped with a wireless communication device that transmits and receives a MAC frame (which may be hereinafter simply indicated as "frame") via an antenna. The wireless communication device includes a wireless communicator configured to transmit and receive a signal wirelessly and controlling circuitry or communication control device configured to control communications by transmitting and receiving frames via the wireless communicator. The access point 11 forms, for example, a wireless communication group which is a basic service set (BSS) according to the IEEE 802.11 standard. The access point 11 establishes a wireless link with the terminals 1 and 2 by performing a process called an association process prior to transmission and reception. The state in which the wireless link is established is expressed as being connected to the access point 11. The access point 11 communicates with the terminals 1 and 2 by the wireless communicator. However, the access point 11 only needs to be able to communicate with the terminals 1 and 2, and the access point 11 may not necessarily have a function as an access point defined in accordance with the IEEE 802.11 standard. In that case, the access point 11 can be regarded as a relay station that relays communications between the terminals 1 and 2.

The terminals 1 and 2 each include one or more antennas. The terminals 1 and 2 are each equipped with a wireless communication device that transmits and receives frames via the one or more antennas. The wireless communication device includes a wireless communicator configured to transmit and receive a signal wirelessly and controlling circuitry or communication control device that controls communications by transmitting and receiving frames via the wireless communicator.

Also, either one of the terminals 1 and 2 may have an access point function. In this case, the terminal having the access point function may communicate with the access point 11 via a relay station. Any network configurations other than what is mentioned herein may be used as long as the access point 11 can transmit and receive frames to and from a plurality of terminals.

The access point 11 may be further connected to a network different than the wireless network to which the terminals 1 and 2 belong. The different network may be a wired network, a wireless network, or a hybrid network including wired and wireless features.

According to this embodiment, a MAC frame (frame) is transmitted and received as communication. More specifically, a physical packet with a physical header (PHY header) added to the frame is transmitted and received. In the following description, the phraseology of "to transmit or receive a frame" or the like indicates that a physical packet including a frame is actually transmitted or received. In addition, in the following description, any reference to the "length of the frame" or the "frame length" may be construed as the length of the physical packet including the frame or the packet length.

FIG. 2A illustrates a schematic configuration example of a physical packet. The physical packet includes a physical header and a frame added to the end of the physical header. As an example, the physical header includes L-STF (Legacy-Short Training Field), L-LTF (Legacy-Long Training Field) and L-SIG (Legacy Signal Field) defined in accordance with the IEEE 802.11 standard. L-STF, L-LTF, and L-SIG are fields that can be recognized by terminals of legacy standards such as IEEE 802.11 b/a/n/ac and the like, and pieces of information such as information for signal detection, information for frequency correction (or reception power measurement or propagation path estimation), transmission rate (MCS (Modulation and Coding Scheme)), and the like are stored therein. L-STF and L-LTF constitute a legacy preamble part. Fields other than those mentioned herein may be included.

FIG. 2B illustrates another configuration example of the physical packet. After the L-SIG field, a SIGNAL field and a preamble field different than a legacy preamble are arranged. In the SIGNAL field, information to be notified to the terminal is set according to the standard in use. The information to be notified to the terminal may include, by way of example, information of the MCS applied to the payload frame. I information for channel estimation, reception power measurement, frequency correction, or the like may be set in the different preamble field.

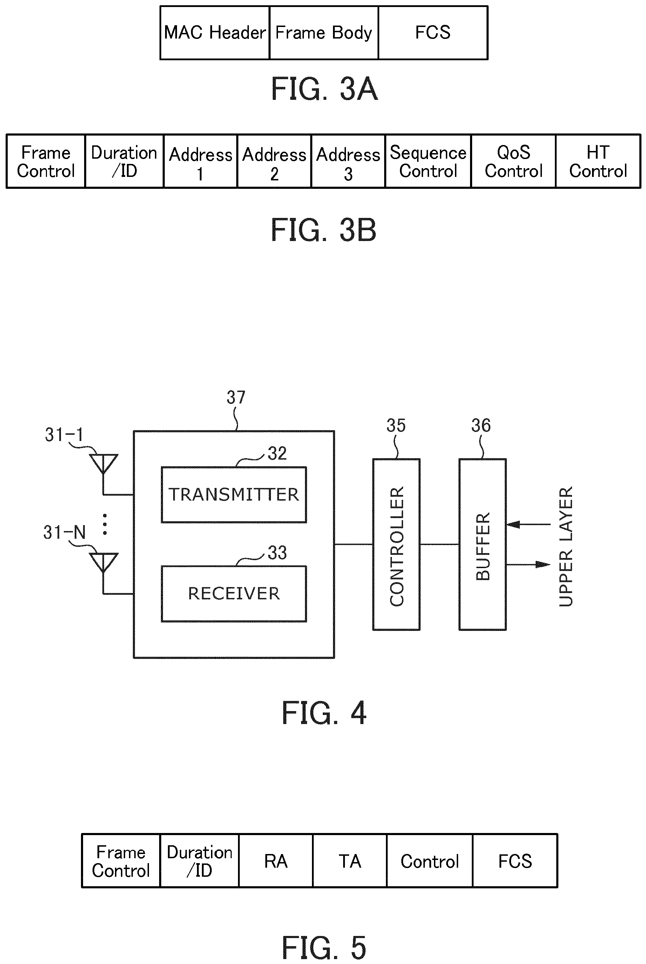

FIG. 3A illustrates an example of a basic format of a MAC frame. This frame format includes fields of MAC header, frame body, and FCS. As illustrated in FIG. 3B, the MAC header includes fields of Frame Control, Duration/ID, Address 1, Address 2, Address 3, Sequence Control, QoS Control, and HT (High Throughput) control.

All of these fields need not necessarily be provided and some of these fields may not be provided. For example, the Address 3 field may not be provided. In addition, there may be cases in which either or both of QoS Control and HT Control fields do not exist. There may be cases where the frame body field does not exist. On the other hand, other fields not illustrated in FIG. 3B may also be provided. For example, an Address 4 field may be additionally provided. The HT Control field may be expanded to other fields depending on the standard in use.

A receiver address (RA) is entered in the field of Address 1, a transmitter address (TA) is entered in the field of Address 2, and a BSSID (Basic Service Set IDentifier) which is an identifier of a basic service set (BSS) (which may be a wildcard BSSID covering all BSSIDs with all the bits set to 1) or a TA is entered in the field of Address 3 depending upon the purpose of the frame.

The Frame Control field includes two fields of Type and Subtype. Rough discrimination of the frame type of whether it is a data frame, a management frame, or a control frame is performed based on the Type field, and more specific discrimination of the roughly discriminated frames is performed based on the Subtype field.

The Duration/ID field describes a medium reservation time, and it is determined that the medium is virtually busy from the end of the physical packet including the MAC frame to the medium reservation time when a MAC frame addressed to another terminal has been received. The Sequence Control field stores the sequence number of the frame and the like. The QoS field is used to perform QoS control such that transmission is performed taking into consideration the priority of the frames. The HT Control field is a field introduced by IEEE 802.11n.

FCS (Frame Check Sequence) information is set in the FCS field as a checksum code used in frame error detection at the receiving side. As an example of the FCS information, CRC (Cyclic Redundancy Code) may be mentioned.

Here, the access point 11 is capable of carrying out full-duplex communications and carrying out at the same time reception of a frame from the terminal 1 (or the terminal 2) and transmission of a frame to the terminal 2 (or to the terminal 1). The terminal 1 has a function corresponding to that of the access point 11 for carrying out full-duplex communications. Specifically, the terminal 1 is a terminal supporting the full-duplex mode. The terminal 2 may be an existing terminal not supporting the full-duplex mode, i.e., a so-called legacy terminal (more specifically, a terminal conforming to, for example, IEEE 802.11 b/a/n/ac). However, the terminal 2 may also be a terminal supporting the full-duplex mode.

FIG. 4 is a functional block diagram of the wireless communication device in the terminal 1 according to this embodiment. The terminal 2 may have the same configuration as the terminal 1 or may be a legacy terminal.

The wireless communication device of the terminal 1 includes at least one antenna 31-1 to 31-N (where N is an integer equal to or larger than 1), a wireless communicator 37, a controller (or controlling circuitry) 35, and a buffer 36. The wireless communicator 37 includes a transmitter 32 and a receiver 33. In the case where a plurality of antennas are provided, the antennas may be separately provided for transmission and reception purposes in the form of a transmission antenna and a reception antenna, or may be used in a shared manner for transmission and reception. When used in a shared manner for both transmission and reception, the connection destination of the antenna may be switched by a switch.

The individual processes in the individual blocks may be performed by software (programs) run on a processor such as a CPU and the like, by hardware, or by combination of software and hardware resources. In addition, the processes in the blocks may be performed based on analog processing, digital processing, or combination of analog processing and digital processing.

The controller 35 mainly performs processing of the MAC layer and part of processing of the physical layer. The controller 35 manages the MAC layer and the PHY layer, and stores information required for the management in a buffer inside or outside the controller 35. Information on the access point 11 and information on the terminal itself may also be managed with this buffer. This buffer may be a memory or a device such as an SSD or a hard disk. In the case of a memory, it may be a nonvolatile memory such as DRAM or a nonvolatile memory such as NAND or MRAM. This buffer may be the same storage medium as the buffer 36 or may be a different storage medium.

When data or information to be transmitted exists, the controller 35 generates a frame including the data or the information, acquires permission for transmission according to the communications scheme in use, and transmits the frame via the transmitter 32. The permission for transmission corresponds to the permission to access a wireless medium. As an example, when carrier sensing is performed based on CSMA/CA (Carrier Sense Multiple Access with Collision Avoidance) and the permission for transmission is acquired with the wireless medium being idle, then a frame (more specifically, a physical packet obtained by adding a physical header to a frame) is transmitted to the transmitter 32 with a TXOP (Transmission Opportunity) based on the permission for transmission. The TXOP corresponds to the time during which a wireless medium can be occupied. It is also possible to add part or the entire physical header by the transmitter 32. The controller 35 may output to the transmitter 32 a signal indicative of at least either of the transmission rate (MCS) and the transmission power applied to the frame.

The transmitter 32 codes and modulates the packet delivered from the controller 35, subjects the packet to digital-to-analog (DA) conversion, extracts a signal component of a desired band from the analog signal, and amplifies the extracted signal by an amplifier. The transmitter 32 then transmits the amplified signal via the antennas 31-1 to 31-N. When an MCS is specified by the controller 35, the transmitter 32 performs coding and modulation of the packet on the basis of the specified MCS. In addition, when the transmission power is instructed by the controller 35, the transmitter 32 adjusts the operation of the amplifier for transmission with the transmission power that has been instructed. When the MCS applied to the frame is set in the physical header of the packet, the transmitter 32 may perform coding and modulation based on the MCS set in the physical header.

The receiver 33 amplifies the signal received by the antenna with a low noise amplifier (LNA), subjects the amplified signal to frequency conversion (down-conversion), and extracts a desired band component by filtering processing. The receiver 33 converts the extracted signal into a digital signal by analog-to-digital (AD) conversion, subjects the digital signal to demodulation, error correction decoding, and processing of the physical header, and inputs the frame to the controller 101. Processing of all or a part of the physical header may be performed by the controller 35.

When a frame necessitating an acknowledgment response has been received, the controller 35 generates an acknowledgment response frame (ACK frame, BA (Block Ack) frame, etc.) based on a result of checking of the received frame, and transmits the generated acknowledgment response frame via the transmitter 32.

The buffer 36 is used as a storage area for exchanging data between the upper layer and the controller 35. When a frame addressed to this terminal has been received, the buffer 36 may temporarily store the data in the frame to pass the stored data to the upper layer. The upper layer performs processing associated with the communication protocols higher than the MAC layer managed by the controller 35 such as TCP/ IP or UDP/IP. Also, in addition to TCP/IP or UDP/IP, the upper layer may perform processing for the application layer. The operation of the upper layer may be performed by processing of software (programs) by a processor such as a CPU, by hardware, or by combination of software and hardware resources.

The controller 35 executes a function or functions in accordance with the full-duplex communication carried out by the access point 11.

Specifically, on the presupposition that the full-duplex communication by the access point 11 has been started, the controller 35 acquires the permission for access based on CSMA/CA and then transmits a dedicated frame for starting the full-duplex communication via the transmitter 32 to the access point 11 before transmitting the frame (which is regarded as a data frame in the following description). This dedicated frame may be a frame extended from a conventional RTS frame or may be a newly defined frame. According to this embodiment, a frame defined by extending the RTS frame is considered and described as an FD (full duplex) -RTS frame. As a method of extension, for example, a value of a subtype to be set in the Frame Control field may be newly defined and a field for notifying the information according to this embodiment may be newly added to the conventional RTS frame.

FIG. 5 illustrates an example of the format of the FD-RTS frame. It will be appreciated that a Control field is added to the conventional RTS frame. The name of the Control field is an example, and other field name such as Information may be used.

The controller 35 specifies in the Control field information to be notified to the access point 11. Specifically, the MCS applied to the data frame to be transmitted thereafter and information associated with reception power (information for specifying the reception power) at the time of the access point 11 receiving the data frame are specified in the Control field. The controller 35 transmits the FD-RTS frame to the access point 11 via the transmitter 32.

The information associated with the reception power to be notified by the FD-RTS frame may be any information as long as the access point 11 can recognize in advance the reception power of the data frame from the terminal 1. For example, the information may be the reception power value as such of the data frame received by the access point 11. In this case, the terminal 1 recognizes in advance the distance attenuation amount from the access point 11 through frame exchange with the access point 11 or the like. Then the transmission power should be adjusted and the data frame should be transmitted such that the access point 11 can receive the data frame with the reception power value of the data frame to be notified by the FD-RTS frame. Since the terminal 1 controls the transmission power so as to transmit the data frame such that the access point 11 can receive the data frame with the notified reception power value, the access point can expect that the data frame is received with the reception power value notified by the FD-RTS frame. When the access point 11 can recognize the reception power value of the data frame in advance, for example, in the case where the reception power value is prescribed by the standard, then it is possible to intentionally omit such information.

Also, the information associated with the reception power notified by the FD-RTS frame may be the transmission power value (W1) at which the terminal 1 transmits the data frame and the transmission power value (W2) at which the terminal 1 transmits the FD-RTS frame. From these values, the access point 11 can recognize the reception power value for receiving the data frame. Specifically, the terminal 1 transmits the FD-RTS frame with the transmission power (W2). The access point 11 receives the FD-RTS frame and measures the reception power, and thereby recognizes the distance attenuation amount (γ) between the terminal 1 and the access point 11. If the access point 11 can recognize the distance attenuation amount between the two devices, access point 11 can recognize in advance that the reception power of the data frame will be (W1 - y) from the transmission power value (W1) notified by the FD-RTS frame. It should be noted here that the transmission power value (W2) of the FD-RTS frame itself, if it is predefined, does not need to be notified by the FD-RTS frame. In addition, if the transmission power value (W1) of the data frame is predefined, it does not need to be notified by the FD-RTS frame. Also, when W1 and W2 take the same value, they may be notified by an FD-RTS frame as a common transmission power value (W) applicable to both the FD-RTS frame and the data frame. Further, identification of the distance attenuation amount between the two devices may be performed by a preceding frame exchange (not shown) without using the FD-RTS frame.

The controller 35 is configured to receive a dedicated frame notifying the transmission permission of the data frame from the access point 11 via the receiver 33 after a predetermined time from the transmission of the FD-RTS frame. The dedicated frame may be a conventional CTS frame, a frame extended from a conventional CTS frame, or a newly defined frame. The dedicated frame is hereinafter referred to as "FD-CTS frame." For example, the predetermined time may be a time called SIFS (Short Inter Frame Space) or longer or shorter than that. SIFS is considered here.

The controller 35 transmits a data frame to the access point 11 via the transmitter 32 after the lapse of a predetermined time (SIFS is considered here but it may be a time other than SIFS) from the reception of the FD-CTS frame. It is assumed that the MCS and the transmission power of the data frame follow the information notified in advance to the access point 11 by the FD-RTS frame.

In the operation example described above, the access point 11 transmits the FD-CTS frame as a response to the FD-RTS frame, but a configuration that does not return the FD-CTS frame may also be considered. In this case, the controller 35 of the terminal 1 should transmit the data frame to the access point 11 via the transmitter 32 after the lapse of a predetermined time (e.g., SIFS) of the FD-RTS frame transmission.

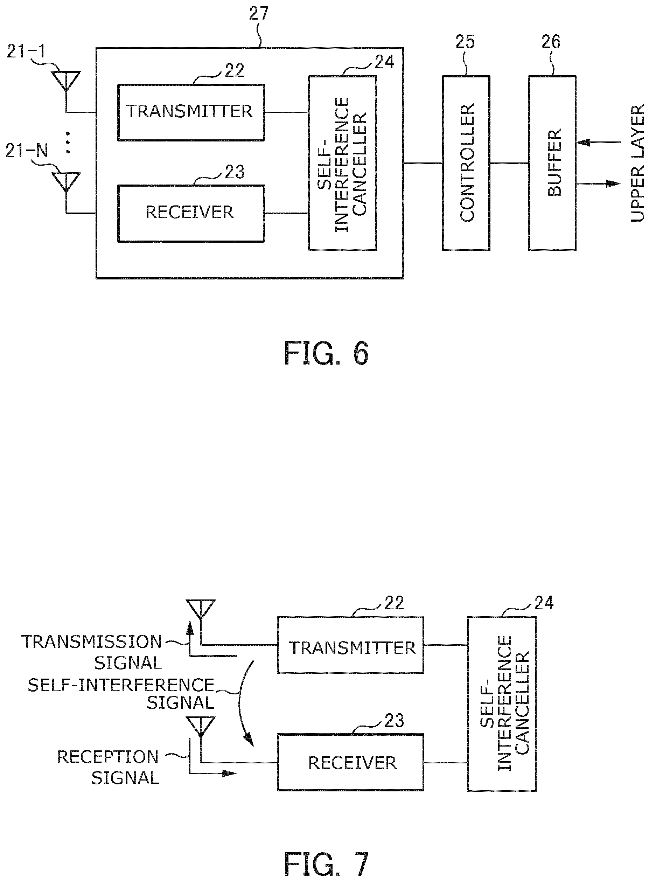

FIG. 6 is a functional block diagram of the wireless communication device in the access point 11 according to this embodiment. The wireless communication device according to this embodiment can carry out full-duplex communication in which transmission and reception of signals are performed in the same frequency band at the same timing (in parallel with each other).

The wireless communication device in FIG. 6 includes at least one antenna 21-1 to 21-N (where N is an integer equal to or larger than 1), a wireless communicator 27, a controller 25, and a buffer 26. The wireless communicator 27 includes a transmitter 22, a receiver 23, and a self-interference canceller 24. In the case where multiple antennas are provided, the antennas may be separately provided for transmission and reception in the form of a transmission antenna and a reception antenna, or may be used in a shared manner for transmission and reception. When the antenna is used in a shared manner for both transmission and reception, the connection destination of the antenna may be switched by a switch. The self-interference canceller 24 is a part of the wireless communicator 27, but it may be arranged as a single circuit outside the wireless communicator 27 or may be a part of the controller 25.

The individual processes in the individual blocks may be performed by software (programs) run on a processor such as a CPU and the like, by hardware, or by combination of software and hardware resources. In addition, the processes in the blocks may be performed based on analog processing, digital processing, or combination of analog processing and digital processing.

The controller 25 mainly performs processing of the MAC layer and part of processing of the physical layer. The controller 25 manages the MAC layer and the PHY layer and stores information required for the management in a buffer inside or outside the controller 25. Information on the terminal connected to the access point 11 and information on the access point as such may also be managed with this buffer. The buffer may be a memory or a device such as an SSD or a hard disk. In the case of a memory, it may be a nonvolatile memory such as DRAM or a nonvolatile memory such as NAND or MRAM. The buffer may be the same storage medium as the buffer 26 or may be any other storage medium.

When data or information to be transmitted exists, the controller 25 generates a frame including the data or information, acquires permission for transmission in accordance with the communication method in use, and transmits the frame via the transmitter 22. The permission for transmission corresponds to the permission to access a wireless medium. As an example, when carrier sensing is performed based on CSMA/CA (Carrier Sense Multiple Access with Collision Avoidance) and the permission for transmission is acquired with the wireless medium being idle, then a frame (more specifically, a physical packet obtained by adding a physical header to a frame) is transmitted to the transmitter 22 with a TXOP (Transmission Opportunity) based on the permission for transmission. The TXOP corresponds to the time during which a wireless medium can be occupied. It is also possible to add part or the entire physical header by the transmitter 22. The controller 25 may output to the transmitter 22 a signal indicative of at least either of the transmission rate (MCS) and the transmission power applied to the frame.

The transmitter 22 codes and modulates the packet delivered from the controller 25, subjects the packet to digital-to-analog (DA) conversion, extracts a signal component of a desired band from an analog signal, and amplifies the extracted signal with by an amplifier. The transmitter 22 then transmits the amplified signal via the antennas 21-1 to 21-N. When MCS is specified by the controller 25, the transmitter 22 performs coding and modulation of the packet on the basis of the MCS. In addition, when the transmission power is instructed by the controller 25, the transmitter 22 adjusts the operation of the amplifier for transmission with the transmission power that has been instructed. When the MCS applied to the frame is set in the physical header of the packet, the transmitter 22 may perform coding and modulation based on the MCS set in the physical header.

The receiver 23 amplifies the signal received by the antenna with a low noise amplifier (LNA), subjects the amplified signal to frequency conversion (down-conversion), and extracts a desired band component by filtering processing. The receiver 23 converts the extracted signal into a digital signal by analog-to-digital (AD) conversion, subjects the digital signal to demodulation, error correction decoding, and processing of the physical header, and inputs the frame to the controller 25. Processing of all or a part of the physical header may be performed by the controller 25.

When a frame necessitating an acknowledgment response has been received, the controller 25 generates an acknowledgment response frame (ACK frame, BA (Block Ack) frame, etc.) based on a result of checking of the received frame, and transmits the generated acknowledgment response frame via the transmitter 22.

The controller 25 performs various control processes associated with full-duplex communications according to this embodiment. For example, switching control between full-duplex communications and half-duplex communications, and selection control to select a terminal with which communications should be made are performed. Also, the controller 25 controls the transmission power and the transmission rate with respect to the terminals.

The buffer 26 is used as a storage area for exchanging data between the upper layer and the controller 25. Also, the buffer 26 may temporarily store data included in a frame that has been received from the terminal for relaying it to another terminal. In addition, when a frame addressed to this terminal has been received, the buffer 26 may temporarily store the data in the frame for passing it to the upper layer. The upper layer performs processing associated with the communication protocols higher than the MAC layer managed by the controller 25 such as TCP/ IP or UDP/IP. Also, in addition to TCP/IP or UDP/IP, the upper layer may perform processing for the application layer. The operation of the upper layer may be performed by processing of software (programs) by a processor such as a CPU, by hardware, or by combination of software and hardware resources.

The self-interference canceller 24 performs cancellation processing of a self-interference signal occurring in the device itself at the time of full-duplex communication. During full-duplex communication, a signal goes from the transmitter 22 to the receiver 23, which becomes a self-interference signal acting as a factor that causes deterioration in the characteristics of the received signal. This situation is schematically illustrated in FIG. 7. When full-duplex communication is performed, specifically, when transmission and reception are performed at the same time, a part of the transmission signal is mixed in the signal received by the antenna, and the mixed signal may be input to the receiver 23. The self-interference canceller 24 removes the self-interference signal, i.e., an unwanted transmission signal that is introduced via the transmitter 22 into the receiver 23.

One method of removing the self-interference signal is to provide a circuit for ensuring isolation between the transmitter 22 and the receiver 23 so that the transmission signal is not introduced into the receiver 23. In this case, the self-interference canceller 24 is arranged as a circuit for isolation.

Another method of removing the self-interference signal is to provide a path for inputting the transmission signal output from the transmitter 22 in a wired or wireless manner to the receiver 23 or a circuit at the preceding stage thereof, and subtracting the transmission signal input from the path from a mixture of the reception signal and the self-interference signal. In this case, the self-interference canceller 24 includes a circuit that includes the path and is configured to subtract the transmission signal from the mixed signal.

The self-interference canceller 24 can also remove the self-interference signal from the mixed signal by a method other than the one described herein.

Here, the self-interference cancellation capability of the self-interference canceller 24 which defines the range in which the self-interference canceller 24 can perform the cancellation is expressed as "X (dB)." The self-interference canceller 24 does not necessarily need to cancel the self-interference signal completely (to zero). The self-interference signal does not need to be completely canceled and part of the self-interference signal may remain to exist. In other words, the level of the self-interference signal may be equal to or greater than the self-interference cancellation capability X (dB). The value of self-interference cancellation capability X (dB) defining the cancellable range may not always be fixed and may be variable depending on the situations. In this embodiment, the self-interference signal remaining without being canceled is called a residual self-interference signal.

Next, an operation example of full-duplex communication control by the controller 25 will be described. The description will be given with reference to an example where the terminal 1 of FIG. 1 transmits a data frame by uplink (UL) transmission to the access point 11 and at the same time the access point 11 transmits a data frame by downlink (DL) transmission to the terminal 2. Meanwhile, the description may be read with the terminals 1 and 2 replaced by each other. In the following description, a frame that is transmitted by UL transmission by the terminal 1 may be referred to as "UL frame," and a frame that is transmitted by DL transmission by the access point 11 may be referred to as "DL frame."

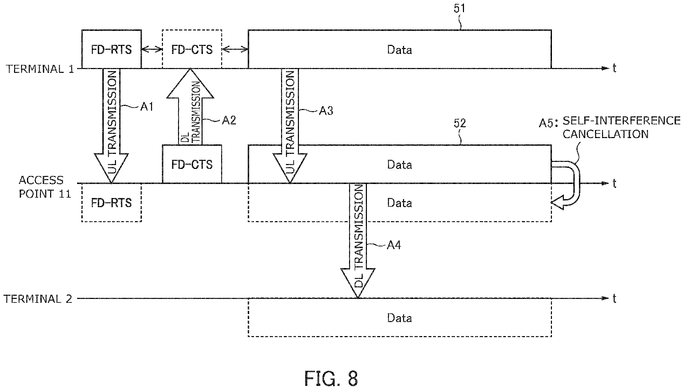

FIG. 8 illustrates an operation example of the full-duplex communication control according to this embodiment.

The terminal 1 acquires the permission for transmission by random backoff in accordance with CSMA/CA and transmits by UL transmission an FD-RTS frame to the access point 11 (process A1 in FIG. 8).

The access point 11 identifies the MCS applied to the data frame 51, which will be transmitted later by the terminal 1, on the basis of the information specified in the FD-RTS frame, and recognizes the reception power at the time of receiving the data frame 51. Any value representing the reception power may be used, as an example of which RSSI (Received Signal Strength Indicator) may be mentioned.

The access point 11 determines the minimum reception quality required for correctly receiving the data frame 51 on the basis of the MCS and the reception power that have been recognized. Here, SINR (hereinafter referred to as required SINR) is determined as the reception quality. Generally, when the transmission rate MCS becomes higher, the required SINR required for correct reception also becomes higher, which means that different SINRs are required for respective MCS rates. Here, to receive a frame correctly means, but is not limited to, reception of a frame with a reception quality (SINR (signal to interference noise ratio), etc.) ensuring that the frame can be received at or lower than a certain frame error rate.

A specific example of the method of determining the required SINR will be described. The access point 11 holds a table that stores SINR values satisfying a certain frame error rate (e.g., 5%) or less for each MCS. The location where the table is held may be an internal buffer of the controller 25, the buffer 26, or any other storage device.

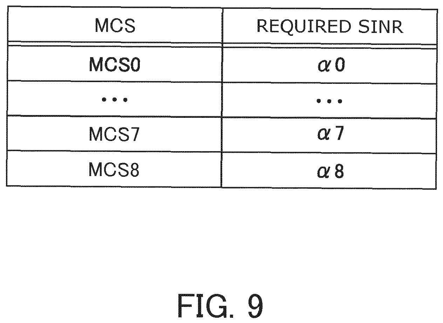

FIG. 9 illustrates an example of the table. α0 to α8 (α0 < ... < α8), which are associated with MCS0 to MCS8, respectively, are stored as the required SINRs. The access point 11 determines the required SINR value by referring to the table in accordance with the MCS that has been identified. For example, if the MCS is identified as MCS7, then α7 is determined as the required SINR value.

The number of tables to be held is not necessarily one, and a plurality of tables may be held according to the usage environment of the system or the conditions such as the frame size. In that case, the access point 11 may select the table to be referred to in accordance with the corresponding conditions.

The method of determining the required SINR is not limited to the method described here, and any appropriate method may be used. For example, it is possible to consider a method according to which required SINRs according to respective MCS rates are estimated in advance, for example, by performing channel estimation prior to reception of the FD-RTS frame (estimation of amplitude fluctuation and phase variation, etc.) using the preamble section of the physical header of the frame received from the terminal, etc. Another method may also be considered according to which the required SINR is estimated by performing channel estimation using the preamble section of the FD-RTS frame.

Next, the access point 11 calculates the maximum transmission power allowable in transmission of the data frame 52 to be DL-transmitted to the terminal 2 simultaneously with the reception of the data frame 51. The maximum transmission power is calculated on the basis of the required SINR value that has been determined, the reception power that has been recognized, and the self-interference cancellation capability.

The calculation method for calculating the maximum transmission power will be described below. The concept of calculation will be described first. In the case where the data frame 51 can be received with a sufficiently large reception power with respect to the required SINR value, the data frame 51 can be received correctly as long as the required SINR value can be satisfied even when the level of the self-interference signal is large to some extent. For this reason, considering the existence of a margin with respect to the required SINR value, there will be no problem even if the self-interference level increases. In other words, the transmission power for DL transmission can be increased. On the other hand, if a sufficient margin cannot be expected relative to the required SINR value, it is not possible to satisfy the required SINR value unless the self-interference signal level is suppressed as well. For this reason, it is necessary to restrict the self-interference level as much as possible and accordingly to reduce the transmission power of the DL transmission as well. In other words, it is necessary to avoid increase in the transmission power. Given the above concept, the calculation of the maximum transmission power level within which DL transmission can be made is determined specifically as follows.

When the transmission power for DL transmission is "Y (dBm)" and the self-interference cancellation capability at the access point 11 is "X (dB)," then the level of self-interference due to the unwanted signal introduction is "(Y - X) (dB)." Accordingly, when the required SINR value that has been determined is "α (dB)," the reception power value that has been recognized is "β (dBm)," and the noise power value is "γ (dB)," then the transmission power "Y" has to satisfy: $α \geq β - \left(\left(Y-X\right)+γ\right)$

In other words, "(β - ((Y - X) + y))" has to be less than or equal to α. Hence, "Y" satisfying α = β - ((Y - X) + y) is the maximum transmission power Ymax.

The values "α" and "β" can be recognized from the FD-RTS frame that has been received from the terminal 1. Also, the value γ can be calculated from the thermal noise that depends on the frequency band width in use and the noise figure (NF) in the device itself. Hence, given the above expression, the transmission power Y with which the access point 11 can perform DL transmission to the terminal 2 simultaneously with the reception of the data frame 51 from the terminal 1 as the full-duplex communication can be calculated as the maximum transmission power Ymax. "Ymax - X" corresponds to the maximum allowable self-interference amount.

In the above example, the required SINR value is used as the reception quality for calculating the maximum transmission power of the DL transmission, but other metrics that vary depending upon the communication quality such as SIR (signal-to-interference power ratio) may be used in place of SINR. Even when other metrics are used, it is possible to determine the maximum transmission power Ymax by the same procedure.

Also, in the above description, the self-interference level is defined as "(Y - X)" on the premise that the transmission power is unwantedly introduced into the receiver on an as-is basis (the transmission power does not change). However, in a strict sense, the transmission power does not reach the receiver as it is, and the power considerably attenuated relative to the original transmission power is introduced into the receiver. Accordingly, when the maximum transmission power (larger maximum transmission power) should be obtained more accurately, then the expression (1) may be transformed into an expression whose term of the transmission power Y is corrected.

For example, a coefficient "a" may be introduced to define the unwantedly introduced power as "Y x a," and the following expression (2) may be relied on: $α \geq β - \left(\left(Y\times a-X\right)+γ\right)$

Alternatively, a constant "b" may be introduced to define the unwantedly introduced power as "(Y + b)," and the following expression (3) may be relied on: $α \geq β - \left(\left(Y+b\right)-X\right) ) + γ )$

Expressions other than the above-described expressions (1) to (3) may be used.

As described above, the access point 11 determines the maximum transmission power for DL transmission of the data frame 52 to the terminal 2. In addition, the MCS applied to the data frame 52 and the transmission power of the data frame 52 are determined. The transmission power of the data frame 52 is determined within a range not exceeding the maximum transmission power value. The access point 11 transmits the FD-CTS frame addressed to the terminal 1 after the SIFS has elapsed since the reception of the FD-RTS frame (process A2 in FIG. 8). The RA of the FD-CTS frame is the address of the terminal 1. When the determined maximum transmission power Ymax is equal to or greater than the maximum transmission power value (Y'max) specified by the standard or law, the actual maximum transmission power may be set to "Y'max."

The access point 11 receives the data frame 51 after the lapse of SIFS from the transmission of the FD-CTS frame (process A3 in FIG. 8), and transmits by DL transmission the data frame 52 (more specifically, the physical packet including the data frame 52) to which the MCS determined as described above is applied, where the data frame 52 is transmitted simultaneously with the start of reception of the data frame 51 (more specifically, simultaneously with the start of reception of the physical packet including the data frame 51) with the power lower than or equal to the maximum transmission power that has been determined as described above (in other words, the power not exceeding the maximum transmission power that has been determined) (step A4 in FIG. 8). However, the start timing of the DL transmission of the data frame 52 may be any appropriate timing as long as the timing arrives while the data frame 51 from the terminal 1 is being received (if it is before the reception is completed), and does not necessarily need to arrive simultaneously with the start of reception of the data frame 51. In the example depicted in the figure, the end of the data frame 51 coincides with the end of the data frame 52, but the present invention is not limited to this.

Here, the description "before reception of the data frame 51 is completed" corresponds, for example, to the description "before the end of the data frame 51 is detected in the controller 25 of the access point 11." Specifically, it corresponds to the description "before the end of the data frame 51, which has been demodulated by the receiver 23 and input to the controller 25, is detected by the controller 25." Before detecting the end of the data frame 51, the controller 25 outputs the data frame 51 to the transmitter 22. As another configuration, it is also possible that the receiver 23 detects the start of the frame 51 (packet) and notifies the start of reception (or the reception start of the packet) to the controller 25, and detects the end of the frame (or the end of the packet) and notify the completion of reception to the controller 25. In this case, the controller 25 outputs the DL data frame 52 to the transmitter 22 after receiving the notification of the start of frame reception and before receiving the completion of frame reception.

In the transmission of the data frame 52, the transmission power of the data frame 52 enters the receiver side in a roundabout manner, but the self-interference canceller 24 cancels the self-interference signal by the self-interference cancellation capability (process A5 in FIG. 8). The residual self-interference signal remaining after cancellation falls below the allowable amount of self-interference amount "(Ymax - X)," so that the access point 11 can correctly receive the data frame 51 received simultaneously with the transmission of the data frame 52. Thus, even if the self-interference signal cannot be completely canceled because of not performing frame transmission to the terminal 2 with the power higher than the determined maximum transmission power, it is still possible to correctly receive the data frame 51 from the terminal 1. In other words, it is made possible to simultaneously transmit the data frame 52 to the terminal 2 with the transmission power within the range where the data frame 51 can be correctly received.

Specifically, when the access point 11 performs the full-duplex communication, the communication quality at the terminal receiving the data frame 52 can be improved by the amount corresponding to the increase in the transmission power for DL transmission. However, on the other hand, if the transmission power is increased, the level of the self-interference due to the unwantedly introduced signal also increasing, as a result of which the communication quality of the data frame 51 received by the station itself deteriorates due to the influence of the self-interference. In this way, there is a trade-off relationship unique to full-duplex communication. In this embodiment, taking into account this trade-off relationship, it is made possible to perform the transmission of the data frame 52 with the transmission power within a range not affecting the reception of the data frame 51 (with the transmission power within a range where the data frame 51 can be correctly received).

It should be noted that the terminal 2 only receives the data frame 52 transmitted from the access point 11, and there is no need of additional change to the MAC protocol for full-duplex communication. It suffices that at least the access point 11 and the terminal 1 support the full-duplex communication according to this embodiment. In other words, even when a terminal supporting the conventional wireless LAN standard up to the current IEEE802.11ac is used as the destination terminal of the DL transmission from the access point 11, the full-duplex communication of this embodiment can be realized.

### (Modified Embodiment)

The access point 11 performs the DL transmission to the terminal 2 with the transmission power equal to or less than the determined maximum transmission power. However, when multiple terminals that are candidates for the DL transmission destination exist (i.e., when at least one terminal in addition to the terminals 1 and 2 has established the connection), the terminal of the DL transmission destination may be selected from among a plurality of candidates. The selection of the DL transmission destination terminal may be performed according to the maximum transmission power for DL transmission or may be performed regardless of the maximum transmission power. These cases will be individually described in detail below.

### [Selecting DL transmission Destination Terminal from Multiple Candidate Terminals Independent of Maximum Transmission Power Determined]

As an example of selecting the DL transmission destination terminal regardless of the maximum transmission power that has been determined, the transmission destination terminal may be determined in advance in accordance with the DL transmission data (DL data) held in the buffer 26 in the access point 11. Alternatively, the DL transmission destination terminal may be randomly selected from the terminals having DL data in the buffer 26.

Alternatively, the DL transmission destination terminal may be determined in accordance with the amount of interference with the terminal 1 that performs UL transmission. For example, the access point 11 may measure the amount of interference (interference level) of a signal from the terminal 1 to a plurality of candidate terminals, and may select a terminal having the minimum interference amount or an interference amount less than or equal to a threshold. As an example of the measurement of the interference amount, the measurement frame is transmitted from the terminal 1 in advance, the reception power of the measurement frame is measured by each of the plurality of candidate terminals, and the measured values are notified to the access point 11 as the interference amounts. Measurement of the interference amount may be performed by a method other than those described herein. Also, the access point 11 may select a terminal having a relationship of a so-called hidden terminal with the terminal 1. This is because, in the case of selecting a hidden terminal, the signal transmitted from the terminal 1 is not detected by the hidden terminal and does not affect the reception of the frame that is transmitted by DL transmission. The method of identifying the hidden terminal may be performed using any appropriate method. For example, the terminal 1 may be made to transmit a frame in a certain period of time and the other candidate terminals may made to report whether or not the frame was successfully detected during that period. A candidate terminal that was not able to make a report can be determined to be a hidden terminal.

In any case, the access point 11 determines the final transmission power (≤ maximum transmission power) after selecting the MCS at which transmission can be made with the determined maximum transmission power or less and performs DL transmission to the selected terminal. The transmission power may be determined in accordance with at least either of the selected MCS and the communication quality (SINR etc.) with the terminal of the transmission destination. The transmission power may be set not to be larger than the determined maximum transmission power. It is not excluded that the transmission is always performed with the determined maximum transmission power.

If there is no MCS at which transmission can be made with the determined maximum transmission power or less for the selected terminal, it is also possible to make a determination that DL transmission to the selected terminal is not performed. In this case, DL transmission is not performed simultaneously with UL reception, as a result of which half-duplex communication where only UL transmission takes place will be performed instead of full-duplex communication. In this manner, it is also possible to make a determination as to whether to perform communications by full-duplex communication or half-duplex communication according to the determined maximum transmission power. If there is no MCS at which transmission can be made with the determined maximum transmission power or less for the selected terminal, another terminal and an MCS may be selected again to perform DL transmission by repeating the same or similar process.

### [Selecting DL transmission Destination Terminal from Multiple Candidate Terminals in Accordance with Maximum Transmission Power Determined]

When a DL transmission destination terminal is to be determined according to the maximum transmission power that has been determined, the DL transmission destination terminal should be selected from a group of terminals that are capable of transmitting at or below the determined maximum transmission power. In other words, such a terminal that is not capable of DL transmission unless the transmission power is higher than the determined maximum transmission power should not be selected. Generally, as the maximum transmission power determined becomes larger, it also becomes possible to transmit to terminals more distant from the access point 11, so that the selection can be made from among a relatively large number of terminals. After selecting the MCS suitable for DL transmission for the selected terminal, the final transmission power (≤ maximum transmission power) is determined and DL transmission is performed. If there is no terminal that can transmit at or below the determined maximum transmission power, it may be determined that no terminal is selected and DL transmission is not performed (i.e., not to perform full-duplex communication).

When multiple terminals exist that can transmit at or below the determined maximum transmission power, it is also possible to select a terminal from among those terminals that can be determined to be the most suitable combination with the UL transmission by the terminal 1. For example, in the same or similar manner as the above-described method, the terminal may be selected based on the interference amount from the terminal 1. In other words, a terminal having a minimum interference amount (or an interference amount not larger than a threshold) from the terminal 1 to the multiple candidate terminals may be selected. Also, the MCS to be applied to the DL frame may be determined on the basis of the amount of interference at the selected terminal. The method of measuring the interference amount may be the same as the above-described method. In addition, the access point 11 may select a terminal having a relationship of a so-called hidden terminal with the terminal 1.

Also, among these terminals, the terminal with the oldest DL data held in the buffer 26 may be selected as the DL transmission destination terminal.

Also, the DL transmission destination terminal may be selected based on approximation to the frame length of the frame transmitted by UL transmission by the terminal 1. For example, a terminal is selected that is capable of transmitting a frame having such a frame length that, when a DL frame is to be transmitted, the end of this DL frame is identical with or close to the end of the frame transmitted by UL transmission by the terminal 1. As a result, the end of the UL transmission and the end of the DL transmission can be tailored or made close to each other.

The terminal may be selected by a method other than those described above. In any case, a terminal to which transmission can be made at or below the determined maximum transmission power is selected, and the MCS at which transmission can be made at or below the predetermined maximum transmission power is also selected to perform DL transmission.

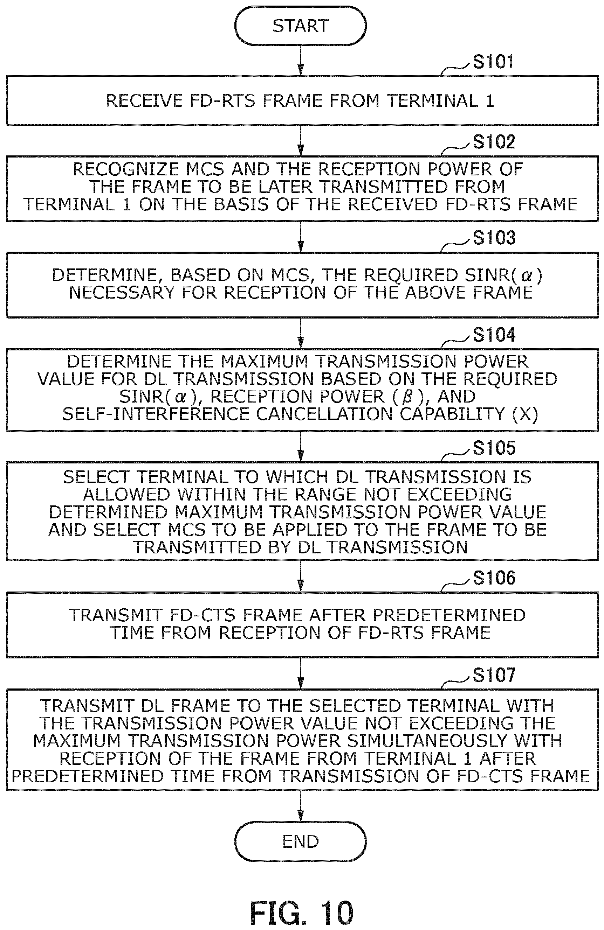

FIG. 10 illustrates an example of a process flow in full-duplex communication by the access point 11.

The access point 11 receives the FD-RTS frame from the terminal 1 (S101). The access point 11 recognizes the MCS applied to the data frame 51 that will be transmitted subsequently by UL transmission, and also recognizes the reception power of the data frame 51 on the basis of the information specified in the received FD-RTS frame (S102).

The access point 11 determines a required SINR(α) required for correctly receiving the data frame 51 on the basis of the MCS that has been recognized (S103).

The access point 11 determines the maximum transmission power value (Ymax) for DL transmission based on the required SINR(α), the reception power (β), and the self-interference cancellation capability (X) (S104).

The access point 11 selects a pair of one terminal to which a DL frame can be transmitted and one MCS to which within a range equal to or less than the maximum transmission power value (S105). The MCS applicable to transmission to a terminal may be selected within the range of the maximum transmission power after selecting this terminal as the destination of DL transmission first. Alternatively, an MCS may be selected first and then a terminal to which transmission can be made within the range not exceeding the maximum transmission power at the selected MCS may be selected. In any case, the terminal to which transmission can be made within the range not exceeding the maximum transmission power is determined on one hand and the MCS on the other hand. In addition, the transmission power required for performing DL transmission to the selected terminal at the selected MCS power are decided. It is also possible to always perform transmission with the determined maximum transmission power, in which case the maximum transmission power should be determined. In addition, if it is not possible to transmit the DL frame within the range of the maximum transmission power value or less, a terminal may be reselected again. Alternatively, it may be determined that DL transmission is not performed (half-duplex communication with UL transmission only) without reselecting the terminal.

The access point 11 transmits an FD-CTS frame to the terminal 1 as a response to the FD-RTS frame after the lapse of a predetermined time (SIFS etc.) from reception of the FD-RTS frame (S106). Further, the FD-CTS frame may not be transmitted, in other words, the step of S106 may be omitted.

The access point 11 receives the data frame 51 from the terminal 1 after the lapse of a predetermined time (SIFS etc.) from the transmission of the FD-CTS frame and at the same time transmits by DL transmission the data frame 52 to the selected terminal (S107). In other words, the data frame 52 is transmitted in parallel with the reception of the data frame 51. More specifically, a frame including the data for DL transmission is generated, the frame is coded and modulated with the selected MCS, and a packet is generated by adding a physical header to the modulated frame. Packet is subjected to digital-to-analog (DA) conversion, a signal component of a desired band is extracted from the analog signal that has been generated, the extracted signal is amplified by the amplifier such that it has the transmission power determined to be less than or equal to the maximum transmission power, and the amplified signal is transmitted via the antenna. If it has been determined in the step S105 that DL transmission is not to be performed, only frame reception from the terminal 1 is performed in the step S107.

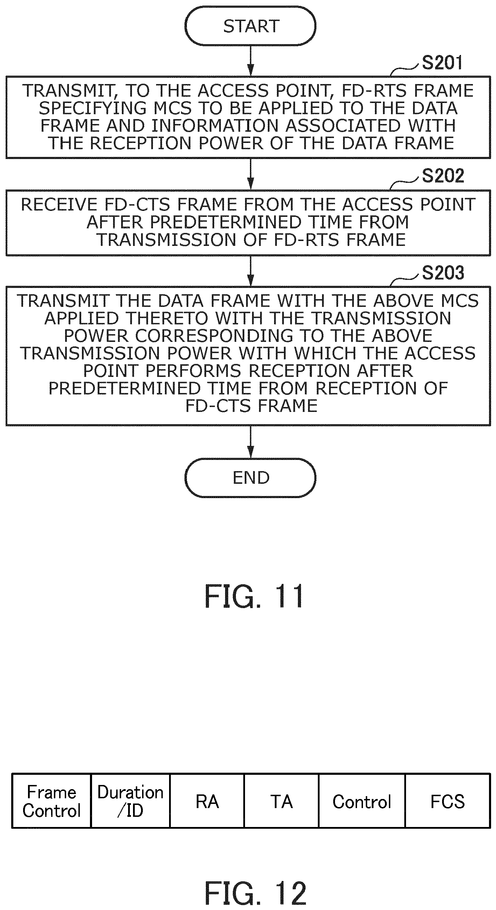

FIG. 11 illustrates an example of a process flow of the terminal 1 when full-duplex communication is performed at the access point 11.

The terminal 1 transmits an FD-RTS frame including the MCS applied to the transmission of the data frame 51 and the information associated with the reception power with which the access point 11 receives the data frame 51 (the information for specifying the reception power) (S201).

The terminal 1 receives a FD-CTS frame indicating the permission to transmit the data frame 51 as a response to the FD-RTS frame after the lapse of a predetermined time (SIFS, etc.) from the transmission of the FD-RTS frame (S202).

The terminal 1 transmits the data frame 51 to which the MCS is applied after the elapse of a predetermined time (SIFS, etc.) from the reception of the FD-CTS frame with the transmission power such that the access point 11 will receive the data frame 51 with the above-described reception power (S203). When the data frame 51 is correctly received by the access point 11 and the frame check is successful, then the terminal 1 receives the acknowledgment response frame transmitted from the access point 11 after the lapse of SIFS or the like.

As has been described above, according to this embodiment, the access point determines the transmission power within the range not affecting the reception of the data frame 51 from the terminal 1 by receiving the FD-RTS frame from the terminal 1 in advance, and transmits by DL transmission the data frame 52 with the determined transmission power. This makes it possible to perform full-duplex communication in which the data frame 52 is transmitted at the same time as the data frame 51 while ensuring correct reception of the data frame 51. Further, since it is possible to start transmission of the data frame 52 at the same time as the reception of the data frame 51 starts after a predetermined fixed time from the transmission of the FD-CTS frame, efficient full-duplex communication can be achieved.

### (Second Embodiment)

In the first embodiment, the terminal 1 that transmits the FD-RTS frame serves as a trigger for the start of full-duplex communication and the MCS and transmission power applied to the data frame 51 to be transmitted by UL transmission are determined by the terminal 1 according to its own determination. Accordingly, it is required for the access point 11 to perform transmission power control for DL communication on the premise of the determination of the terminal 1 (in the presence of its constraints). In other words, the operation of the access point 11 is of passive control.

In the second embodiment, the access point is responsible for triggering the start of full-duplex communication. Specifically, prior to the full-duplex communication, the access point transmits a trigger frame (trigger frame) to the terminal 1, and after a predetermined time (e.g., SIFS) has elapsed since the transmission of the trigger frame, a data frame is transmitted to the terminal 2 by DL transmission simultaneously with the data frame being received by UL reception from the terminal 1. Accordingly, the trigger frame transmitted by the access point serves as the full-duplex communication start trigger. The access point can specify, in the trigger frame, the MCS to be applied to the data frame transmitted by UL transmission by the terminal 1 and the information for realizing the reception power of the data frame in the access point itself prior to the actual UL transmission. Accordingly, in accordance with the second embodiment and in contrast to the first embodiment, the access point 11 can control both of UL transmission parameter information (MCS, transmission power, etc.) of the terminal 1 and DL transmission parameter information (MCS and transmission power) of the access point itself. In other words, active control of the access point 11 can be implemented.

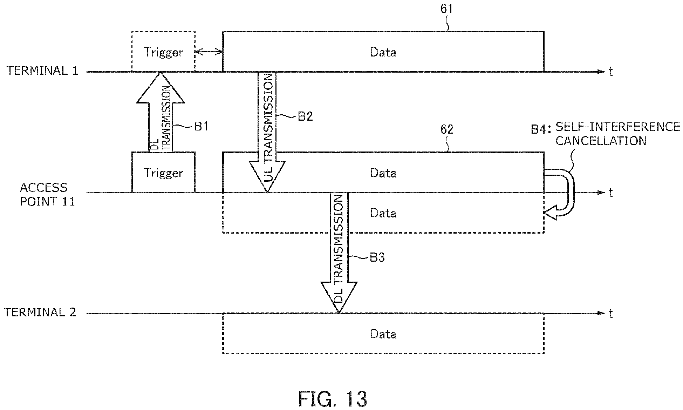

FIG. 13 illustrates an operation example of full-duplex communication control according to this embodiment.

After the access point 11 acquires the permission for transmission by random backoff in accordance with CSMA/CA, the access point 11 transmits the trigger frame to the terminal (terminal 1 in this case) that is made to perform UL transmission (process B1 in FIG. 13). Any appropriate method may be used for selecting the terminal (terminal 1) that is to be made to perform UL transmission. Although the terminal 1 is specified as the destination of the trigger frame here, the determination method of the terminal as the transmission destination of the trigger frame may be performed on the basis of any appropriate information. For example, the access point 11 may make a plurality of terminals report the presence or absence of data for UL transmission in advance, and determine the terminal that is to be made to perform UL transmission on the basis thereof. Alternatively, the access point 11 may randomly select terminals that are to be made to perform UL transmission, or may determine terminals in a predetermined order. It should be noted that the access point 11 may transmit a trigger frame by unicast transmission with the trigger frame addressed to the terminal 1 or by broadcast transmission. When broadcast transmission is to be performed, information indicating the fact that the terminal 1 is the UL transmission target may be set in a predetermined field in the trigger frame. By analyzing the predetermined field in the trigger frame, the terminal 1 recognizes that the terminal 1 has been specified by the access point 11 as a terminal that should perform UL transmission.

FIG. 12 illustrates a format example of the trigger frame. For example, the type of the trigger frame may be a value representing "Control," and the value of the subtype may be newly defined. Information to be notified to or specified for the terminal 1 is set in the Control field. The name of the Control field is an example, and another field name such as "Information" may be used.

Specifically, the access point 11 specifies the transmission parameter information to be followed when the terminal 1 performs UL transmission. When the terminal 1 recognizes that the terminal 1 itself is a UL transmission target on the basis of the RA or the like of the trigger frame received from the access point 11, then the terminal 1 transmits by UL transmission the data frame 61 to the access point 11 after the lapse of SIFS from the trigger frame transmission in accordance with the UL transmission parameter information specified in the Control field (process B2 in FIG. 13). The access point 11 transmits by DL transmission the data frame 62 to the terminal 2 after the lapse of the SIFS from the trigger frame transmission (process B3 in FIG. 13). As a result, full-duplex communication of the reception of the data frame 61 and the transmission of the data frame 62 is started after the SIFS has elapsed since the trigger frame transmission. At the time of transmission of the data frame 62, the transmission power of the data frame 62 is unwantedly introduced to the receiver side, but the self-interference canceller 24 cancels the self-interference signal by the self-interference cancellation capability (process B4 in FIG. 13). As a result, the access point 11 can correctly receive the data frame 61 that is received by UL reception simultaneously with the DL transmission of the data frame 62.

The MCS applied to the data frame 61 transmitted by UL transmission by the terminal 1 and information required for the data frame transmitted by UL transmission to be received with a desired reception power by the access point (i.e., information associated with the transmission power required for performing reception with a desired reception power) are specified as the UL transmission parameter information specified for the terminal 1 in the trigger frame. By notifying these pieces of information to the terminal 1 by the trigger frame, the access point 11 can receive the data frame 61 with the desired MCS and the desired reception power.

The MCS specified by the access point 11 for the terminal 1 may be determined using various link adaptation algorithms or the like in the generally known transmission rate control. According to an example of such a determination method that may be mentioned here, the MCS is determined on the basis of the distance from the access point 11 to the terminal 1, the history of communication quality in the frame interaction in the past and the information associated with the UL data held by the terminal 1(e.g., data size).

As a first example of the information notified to the terminal 1 by the access point 11 so as to ensure that the reception power of the data frame 61 from the terminal 1 to be set to the desired reception power (information associated with the transmission power of the terminal 1), (a) the desired reception power value requested by the access point 11 (target reception power (W3)) and (b) the transmission power value (W4) with which the trigger frame is to be transmitted may be notified. In this case, the terminal 1 measures the reception power of the trigger frame, compares the measured reception power with the value W4 notified in the trigger frame, and thereby calculates the distance attenuation (δ). The terminal 1 should control the transmission power such that it becomes equal to the target reception power (W3) notified from the access point 11 taking into account the distance attenuation (δ) that has been calculated, and should transmit the data frame 61 by UL transmission. When the transmission power of the trigger frame is predefined, it is possible to omit the notification of the transmission power value (W4) of the trigger frame.

Also, as a second example of the information notified to the terminal 1 so as to ensure that the reception power of the data frame 61 is equal to the desired reception power (information associated with the transmission power of the terminal 1), the transmission power value as such with which the terminal 1 performs transmission may be notified. Specifically, the access point 11 recognizes the distance attenuation amount (δ) from the terminal 1 through frame exchange in advance or the like and, on the basis of which, determines the transmission power with which the terminal 1 should perform transmission so as to ensure that the reception power of the data frame 61 is equal to the desired reception power, and notifies the value of the transmission power that has been determined to the terminal 1.

Also, as a third example of the information notified to the terminal 1 so as to ensure that the reception power of the data frame 61 is equal to the desired reception power (information associated with the transmission power of the terminal 1), the access point 11 may notify the target reception power (W3) and the distance attenuation amount (δ) to the terminal 1, and the terminal 1 may transmit the data frame 61 by UL transmission using the notified information and using the value "W3 + δ" as the transmission power.

Here, as another example of such methodology, the access point 11 may determine the UL transmission parameter information of the terminal 1 and then determine the DL transmission parameter information for the terminal 2 within the range defined under the constraints thereof. Alternatively, the access point 11 may determine the DL transmission parameter information for the terminal 2 and then determine the UL transmission parameter information of the terminal 1 within the range defined by the constraints thereof.

### [Determining UL Transmission Parameter Information of Terminal 1 First]

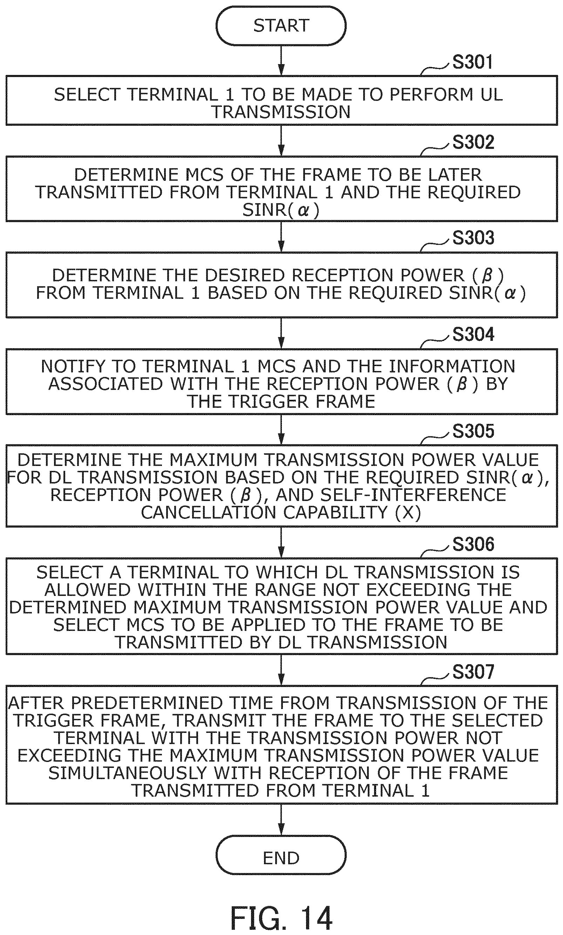

FIG. 14 illustrates an example of a process flow in the case where the UL transmission parameter information of the terminal 1 is determined first.

The access point 11 determines the terminal 1 that is made to perform UL transmission (S301). The access point 11 determines an MCS to be applied to a frame (data frame or the like) to be transmitted by UL transmission from the terminal 1, and determines the required SINR (α) required for the MCS by referring to a table or the like (S302). Based on the required SINR, the access point 11 determines the reception power (β) requested by the access point 11 (S303), and transmits to the terminal 1 the triggering frame specifying the information required for receiving the frame transmitted by UL transmission from the terminal 1 with the desired reception power (the information associated with the transmission power of the terminal 1) and the information of the MCS determined as described above (S304). In general, when a higher the MCS is selected, the required SINR is also becomes large, so that the desired reception power also increases. The transmission power of the terminal 1 may be determined as any appropriate transmission power value as long as it is the reception power equal to or larger than the value β at which the access point 11 satisfies the required SINR. It may be always determined as the maximum transmission power specified by the standard or law.

The access point 11 determines the maximum transmission power value (Ymax) for DL transmission from the required SINR (α), the reception power (β), and the self-interference cancellation capability (X) (S305). When the determined maximum transmission power Ymax is equal to or greater than the maximum transmission power value (Y'max) specified by the standard or law, the maximum transmission power for actual DL transmission may be set to Y'max.

The access point 11 selects a pair of one terminal to which a DL frame can be transmitted within the range not exceeding the maximum transmission power and one MCS at which the DL frame can be transmitted within the same range (S306). The terminal that will be the DL transmission destination may be selected first, and then the MCS applicable to transmission to the terminal may be selected within the range not exceeding the maximum transmission power. Alternatively, the MCS may be selected first, and then a terminal to which transmission can be performed at the selected MCS may be selected within the range not exceeding the maximum transmission. In any case, the terminal to which the transmission can be performed with the maximum transmission power or less and the MCS at which the transmission is performed are determined. In addition, the transmission power required for DL transmission with the selected terminal and the MCS is determined. It is also possible to always perform transmission with the determined maximum transmission power, in which case the maximum transmission power should be determined. Further, if it is not possible to transmit the DL frame within the range not exceeding the maximum transmission power value or less, the terminal may be reselected again. Alternatively, it may be determined that DL transmission is not performed (half-duplex communication with UL transmission only is performed) without reselecting the terminal.

The access point 11 receives the frame transmitted by UL transmission from the terminal 1 after the lapse of SIFS from the transmission of the trigger frame and at the same time transmits the frame by DL transmission to the selected terminal (S307). More specifically, a frame including data for DL transmission is generated, a frame is coded and modulated with the selected MCS, and a packet is generated by adding a physical header to the modulated frame. The packet is subjected to digital-to-analog (DA) conversion, a signal component of a desired band is extracted from the analog signal, and the extracted signal is amplified by the amplifier so as to ensure that the transmission power is equal to the transmission power that has been determined within the range not exceeding the maximum transmission power, and the signal that has been amplified is transmitted via the antenna.

### [Determining DL Transmission Parameter Information to Terminal 2 First]

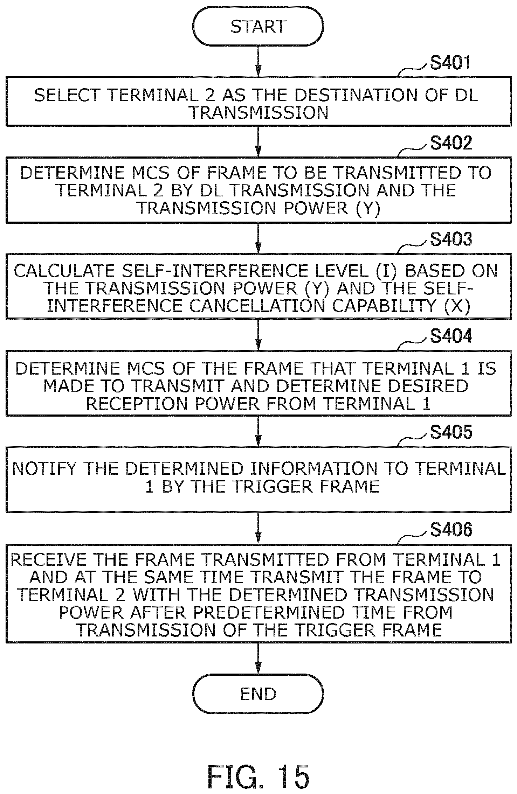

FIG. 15 illustrates an example of a process flow in the case where parameter information for the DL transmission to the terminal 2 is determined first.

The access point 11 selects the terminal 2 that will be the DL transmission destination by a certain method (S401). As the method of selecting the terminal 2, any appropriate method may be used as long as it is a method of selecting it from terminals having data to be transmitted by DL transmission. For example, a method may be mentioned which selects a terminal to which data waiting for the longest time for being transmitted in the buffer 26 is addressed among pieces of data stored in the buffer 26.

The access point 11 determines the MCS and the transmission power (Y) for DL transmission for the selected terminal 2 (S402). The MCS may be determined in accordance with the position (distance attenuation) relationship between the access point 11 and the terminal 2, the frame error rate in communication with the terminal 2 in the past, or both of them. Alternatively, the MCS may be determined in accordance with the size of the data to be transmitted, an application for transmitting the data to be transmitted, or both of them. The method of determining the MCS is not limited to the method described herein and any appropriate method may be used. Also, instead of adaptively determining the MCS, the MCS to be applied may be fixedly determined to the maximum MCS or the minimum MCS. The transmission power (Y) may be determined as any appropriate transmission power value as long as it is equal to or higher than the transmission power with which the terminal 2 is determined to be capable of correctly performing reception at the transmission MCS that has been determined. It may be always determined as the maximum transmission power specified by the standard or law.

The access point 11 uses the transmission power (Y) that has been determined and the self-interference cancellation capability (X) that can be realized by the self-interference canceller 24 and calculates the self-interference amount (I) by which the DL transmission to the terminal 2 affects the UL reception from the terminal 1 in the full-duplex communication.

The self-interference amount is calculated, by way of example, as: $I = Y - X .$ However, the transmission power "Y" is not introduced on an as-is basis, and the power having a level considerably attenuated relative to the original transmission power Y is introduced as the self-interference signal. In that case, it is possible to handle the self-interference amount by transforming it into a formula obtained by correcting the above expression by that amount. Specifically, the unwantedly introduced signal may be defined as "Y x a" using the coefficient "a" in the same or similar manner as in the case of the expression (2), or may be defined as"(Y + b)" using the constant "b" in the same or similar manner as in the case of the expression (3).

The access point 11 determines, on the basis of the self-interference amount (I), the MCS applied to the frame transmitted by UL transmission by the terminal 1 and the desired reception power necessary when the access point 11 itself receives the frame from the terminal 1 (S404). The step S404 will be described in detail below.

It should be noted that, in the case assumed here, the terminal 1 is made to perform UL transmission. Meanwhile, if there are multiple candidate terminals for UL transmission (UL transmission source terminals), a terminal that is made to perform UL transmission should be selected from the multiple candidate terminals. Any appropriate method may be used in the selection.

As an example, the access point 11 may recognize whether or not each candidate terminal holds the UL data to be transmitted, for example, by receiving transmission request of UL data from multiple candidate terminals in advance, and the access point 11 may select the terminal that is made to perform UL transmission on the basis of the information obtained in advance. As another example, a terminal that is made to perform UL transmission may be selected from multiple candidate terminals in accordance with the positional relationship with the terminal 2. Specifically, a terminal with a low interference amount with respect to the terminal 2 may be selected from among the candidate terminals. As the specific method, the same method as in the first embodiment may be used. As still another example, a terminal that is made to perform UL transmission may be selected in accordance with the calculated value of the self-interference amount (I). For example, it may be considered that, when the self-interference amount becomes larger, the terminal is selected from among the terminals located closer to the access point 11. For example, a terminal with the smallest attenuation amount or with the attenuation amount equal to or less than a threshold value is selected.

With regard to the method for determining the MCS used by the terminal 1 to perform UL transmission, the access point 11 should determine the MCS using various link adaptation algorithms or the like in the generally known transmission rate control such as a method that determines the MCS on the basis of such information as the distance from the access point 11 to the terminal 1 and the UL data held by the terminal 1.

When receiving the frame at the MCS that has been determined, the access point 11 determines a required SINR value that is minimally necessary to correctly receive the frame. As a method of determining the required SINR value, the same method as in the first embodiment can be used. Specifically, the table as illustrated in FIG. 9 can be used. As in the first embodiment, it is not necessary to hold only one single table, and a plurality of tables may be held according to conditions such as the usage environment or frame size of this system. In that case, the access point 11 may select the table to be referred to according to the corresponding conditions. The method of determining the required SINR is not limited to the method described herein, and any appropriate method may be used therefor. For example, it is also possible to estimate in advance the required SINR in accordance with each MCS for example by performing channel estimation (estimation of the amounts of amplitude fluctuation and phase fluctuation, etc.) using the preamble section of the physical header through frame exchange prior to transmission of the trigger frame.

The access point 11 determines, after having determined the required SINR value, the minimum reception power "P (dBm)" required for reception from the terminal 1 on the basis of the calculated self-interference amount (I) and the required SINR value. Specifically, if the required SINR value is "α (dB)" and the noise power value N is "γ (dBm)," then "P" that satisfies $α = P - \left(I+γ\right)$ will be the minimum reception power.

In other words, even when the access point 11 performs UL reception at the same MCS from the same terminal, the access point 11 requires a larger minimum reception power in response to a larger self-interference amount (I).

The access point 11 determines a value equal to or higher than the minimum reception power "P" (as long as the UL transmission power of the terminal 1 does not exceed the maximum transmission power specified by the standard or law) as the reception power value for receiving the frame from the terminal 1. In other words, the reception power value is determined not to be less than the determined minimum reception power "P." The access point 11 specifies the information associated with the reception power and the information of the determined MCS in the trigger frame so that the terminal 1 can receive the frame by UL reception with the determined reception power, and transmits the trigger frame to the terminal 1 (S405). Here, both the information of the MCS and the information associated with the reception power are notified to the terminal 1, but only either of them may be notified. In the case of only notifying the information associated with the reception power, the available MCS should be determined from the notified information on the side of the terminal 1. This also applies to the opposite case of only notifying the former piece of information.

The access point 11 receives the frame transmitted by UL transmission from the terminal 1 after the lapse of SIFS from the transmission of the trigger frame, and at the same time transmits the frame by DL transmission to the terminal 2 with the determined transmission power (Y) (S406). The terminal 1 transmits the frame by UL transmission in accordance with the information notified by the trigger frame so that the access point 11 can receive the frame by UL reception with the desired reception power. The terminal 1 may perform transmission with a transmission power higher than the transmission power identified from the information notified by the trigger frame.

Here, when the access point 11 can recognize the fact that it is required for the terminal 1 to perform transmission with the transmission power beyond the maximum transmission power specified by the standard or law (e.g., in a case where the access point 11 recognizes the distance attenuation from the terminal 1 in advance), the access point 11 may determine not to perform the UL transmission from the terminal 1. In this case, the access point 11 does not transmit the trigger frame to the terminal 1 but only performs DL transmission to the terminal 2. In other words, this case consequently corresponds to the fact that the access point 11 is making the determination to switch to the half-duplex communication so that full-duplex communication is not performed.

In addition to determining that full-duplex communication is not to be performed, the access point 11 can reselect another terminal and transmit the trigger frame to the other reselected terminal by the same process flow. In this case, full-duplex communication that includes the UL reception from the other reselected terminal and the DL transmission to the terminal 2 is performed.

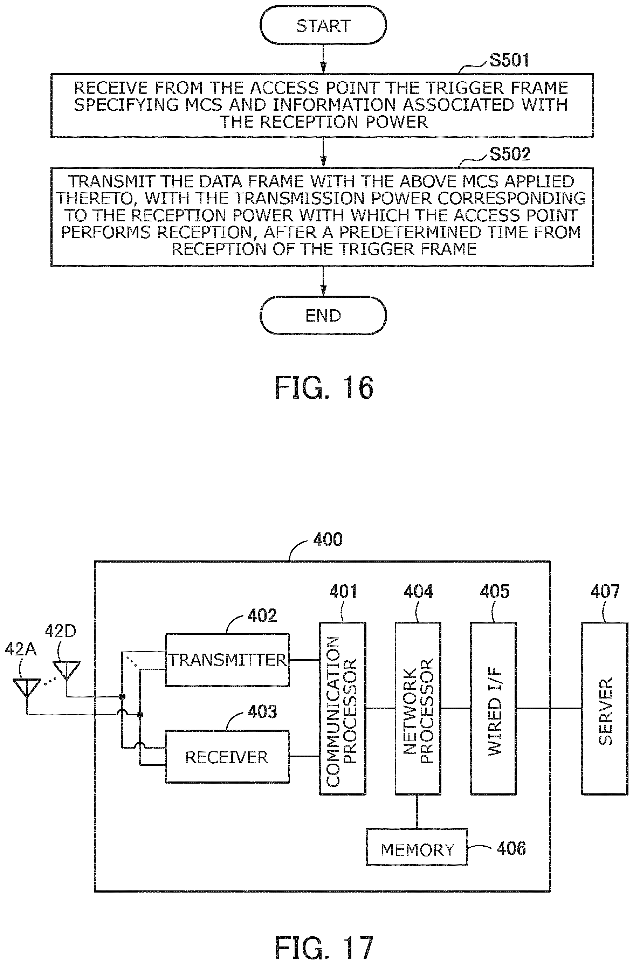

FIG. 16 illustrates an example of a process flow of the terminal 1 when full-duplex communication is performed at the access point 11.

The terminal 1 receives the trigger frame transmitted from the access point 11 (S501). The trigger frame includes, for example, information of the MCS applied by the terminal 1 to the UL transmission and information associated with the desired reception power when the access point 11 receives the frame from the terminal 1.

The terminal 1 transmits by UL transmission a frame such as a data frame or the like in accordance with the information notified by the trigger frame after a predetermined time (SIFS etc.) has elapsed from the reception of the trigger frame (S502). As a result, the access point 11 can receive the frame by UL reception from the terminal 1 with the desired reception power.

### (Modified Embodiment 1)

In the above description, the access point 11 determines the required SINR required for the MCS after determining the MCS to be applied to the UL transmission by the terminal 1 in a certain manner, and determines the minimum reception power with which UL reception from the terminal 1 is to be made (or the lowest transmission power with which UL transmission by the terminal 1 is to be made) on the basis of the required SINR and the self-interference amount (= transmission power "Y" - self-interference cancellation capability "X").

As another method, when the reception power of the reception from the terminal 1 (or the transmission power of the transmission by the terminal 1) is determined by a certain different metric or metrics, the MCS which the terminal 1 is made to apply to the UL transmission may be determined on the basis of the reception power of the reception from the terminal 1 and the self-interference amount.

For example, a case may be considered where the access point 11 needs to perform reception from the terminal 1 with a certain reception power determined in advance due to restriction of the dynamic range at the time of the AD conversion of the access point 11 itself. Alternatively, another case may be considered where the transmission power (the reception power from the terminal 1) from the terminal 1 is set to a certain predetermined level so that the UL transmission from the terminal 1 does not interfere with the terminal 2 due to the positional relationship with the terminal 2 to which DL transmission is performed.

In this case, if the reception power from the terminal 1 determined by another metric is "P' (dBm)," then, based on P' and the self-interference amount "I," the MCS to be applied by the terminal 1 to the UL transmission is determined from among MCS rates that may take, as the required SINR value, the value α' or less satisfying: $α ′ = P ′ - \left(I+γ\right) .$ In other words, even when UL reception is performed from the same terminal with the same reception power, the access point 11 needs to select an MCS from fewer candidates in response to a larger self-interference amount.

Here, when there is no MCS that can have, as the required SINR value, the value α' or less (when the required SINR value is larger than α even at the lowest MCS), the access point 11 may determine that UL transmission from the terminal 1 is not to be performed. In this case, the access point 11 does not transmit the trigger frame to the terminal 1 but only performs DL transmission to the terminal 2. In other words, in this case, this consequently corresponds to the fact that the access point 11 is making a determination of switching to half-duplex communication such that full-duplex communication is not performed.

In addition to determining that full-duplex communication is not to be performed, the access point 11 can reselect another terminal and transmit the trigger frame to the other reselected terminal by the same process flow. In this case, full-duplex communication including UL reception from the other reselected terminal and DL transmission to the terminal 2 will be performed.

### (Modified Embodiment 2)

The access point 11 may first determine the MCS to be applied to UL transmission, calculate the minimum reception power required for receiving the frame at the MCS on the basis of the determined MCS and the self-interference amount (I), and select a terminal that is made to perform UL transmission from among terminal candidates that can perform reception with the minimum reception power or a reception power higher than that. Also, in this case and in the same or similar manner as the above-described case, when there is no terminal candidate that can perform reception with the minimum reception power or a reception power higher than that, the access point 11 may determine not to perform full-duplex communication but only perform DL transmission to the terminal 2.

Also, a method of comprehensive control that combines the methods of FIGS. 14 and 15 may be used.

As has been described above, according to this embodiment, the access point transmits the trigger frame to the terminal 1 in advance and thus can receive the data frame with the desired reception power from the terminal 1, and at the same time transmit the data frame to the terminal 2 with a transmission power within the range not affecting the reception of the frame. By virtue of this, full-duplex communication becomes possible while ensuring that the data frame from the terminal 1 is correctly received. In addition, it is made possible to start reception of a data frame from the terminal 1 at the same time as transmission of a data frame to the terminal 2 after a predetermined fixed time from the transmission of the trigger frame, so that efficient full-duplex communication becomes possible.

### (Third Embodiment)

FIG. 17 is a functional block diagram of a base station (access point) 400 according to the second embodiment. The access point includes a communication processor 401, a transmitter 402, a receiver 403, antennas 42A, 42B, 42C, and 42D, a network processor 404, a wired I/F 405, and a memory 406. The access point 400 is connected to a server 407 through the wired I/F 405. At least a former of the communication processor 401 and the network processor 404 has functions similar to the controller or the controlling circuitry in the first embodiment. The transmitter 402 and the receiver 403 have functions similar to the transmitter and the receiver described in the first embodiment. Alternatively, the transmitter 402 and the receiver 403 may perform analog domain processing in the transmitter and the receiver and the network processor 404 may perform digital domain processing in the transmitter and the receiver in the first embodiment. The communication processor 404 has functions similar to the upper layer processor. The communication processor 401 may internally possess a buffer for transferring data to and from the network processor 404. The buffer may be a volatile memory, such as an SRAM or a DRAM, or may be a non-volatile memory, such as a NAND or an MRAM.

The network processor 404 controls data exchange with the communication processor 401, data writing and reading to and from the memory 406, and communication with the server 407 through the wired I/F 405. The network processor 404 may execute a higher communication process of the MAC layer, such as TCP/IP or UDP/IP, or a process of the application layer. The operation of the network processor may be performed through processing of software (program) by a processor, such as a CPU. The operation may be performed by hardware or may be performed by both of the software and the hardware.

For example, the communication processor 401 corresponds to a baseband integrated circuit, and the transmitter 402 and the receiver 403 correspond to an RF integrated circuit that transmits and receives frames. The communication processor 401 and the network processor 404 may be formed by one integrated circuit (one chip). Parts that execute processing of digital areas of the transmitter 402 and the receiver 403 and parts that execute processing of analog areas may be formed by different chips. The communication processor 401 may execute a higher communication process of the MAC layer, such as TCP/IP or UDP/IP. Although the number of antennas is four here, it is only necessary that at least one antenna is included.

The memory 406 saves data received from the server 407 and data received by the receiver 402. The memory 406 may be, for example, a volatile memory, such as a DRAM, or may be a non-volatile memory, such as a NAND or an MRAM. The memory 406 may be an SSD, an HDD, an SD card, an eMMC, or the like. The memory 406 may be provided outside of the base station 400.

The wired I/F 405 transmits and receives data to and from the server 407. Although the communication with the server 407 is performed through a wire in the present embodiment, the communication with the server 407 may be performed wirelessly.

The server 407 is a communication device that returns a response including requested data in response to reception of a data forward request for requesting transmission of the data. Examples of the server 407 include an HTTP server (Web server) and an FTP server. However, the server 407 is not limited to these as long as the server 407 has a function of returning the requested data. The server 407 may be a communication device operated by the user, such as a PC or a smartphone. The server 407 may wirelessly communicate with the base station 400.

When the STA belonging to the BSS of the base station 400 issues a forward request of data for the server 407, a packet regarding the data forward request is transmitted to the base station 400. The base station 400 receives the packet through the antennas 42A to 42D. The base station 400 causes the receiver 403 to execute the process of the physical layer and the like and causes the communication processor 401 to execute the process of the MAC layer and the like.

The network processor 404 analyzes the packet received from the communication processor 401. Specifically, the network processor 404 checks the destination IP address, the destination port number, and the like. When the data of the packet is a data forward request such as an HTTP GET request, the network processor 404 checks whether the data requested by the data forward request (for example, data in the URL requested by the HTTP GET request) is cached (stored) in the memory 406. A table associating the URL (or reduced expression of the URL, such as a hash value or an identifier substituting the URL) and the data is stored in the memory 406. The fact that the data is cached in the memory 406 will be expressed that the cache data exists in the memory 406.

When the cache data does not exist in the memory 406, the network processor 404 transmits the data forward request to the server 407 through the wired I/F 405. In other words, the network processor 404 substitutes the STA to transmit the data forward request to the server 407. Specifically, the network processor 404 generates an HTTP request and executes protocol processing, such as adding the TCP/IP header, to transfer the packet to the wired I/F 405. The wired I/F 405 transmits the received packet to the server 407.

The wired I/F 405 receives, from the server 407, a packet that is a response to the data forward request. From the IP header of the packet received through the wired I/F 405, the network processor 404 figures out that the packet is addressed to the STA and transfers the packet to the communication processor 401. The communication processor 401 executes processing of the MAC layer and the like for the packet. The transmitter 402 executes processing of the physical layer and the like and transmits the packet addressed to the STA from the antennas 42A to 42D. The network processor 404 associates the data received from the server 407 with the URL (or reduced expression of the URL) and saves the cache data in the memory 406.

When the cache data exists in the memory 406, the network processor 404 reads the data requested by the data forward request from the memory 406 and transmits the data to the communication processor 401. Specifically, the network processor 404 adds the HTTP header or the like to the data read from the memory 406 and executes protocol processing, such as adding the TCP/IP header, to transmit the packet to the communication processor 401. In this case, the transmitter IP address of the packet is set to the same IP address as the server, and the transmitter port number is also set to the same port number as the server (destination port number of the packet transmitted by the communication terminal), for example. Therefore, it can be viewed from the STA as if communication with the server 407 is established. The communication processor 401 executes processing of the MAC layer and the like for the packet. The transmitter 402 executes processing of the physical layer and the like and transmits the packet addressed to the STA from the antennas 42A to 42D.

According to the operation, frequently accessed data is responded based on the cache data saved in the memory 406, and the traffic between the server 407 and the base station 400 can be reduced. Note that the operation of the network processor 404 is not limited to the operation of the present embodiment. There is no problem in performing other operation when a general caching proxy is used, in which data is acquired from the server 407 in place of the STA, the data is cached in the memory 406, and a response is made from the cache data of the memory 406 for a data forward request of the same data.

The base station (access point) according to the present invention can be applied for the base station in the above-stated any embodiment. The transmission of the frame, the data or the packet used in the any embodiment may be carried out based on the cached data stored in the memory 406. Also, information obtained based on the frame, the data or the packet received by the base station in the first to seventh embodiments may be cached in the memory 406. The frame transmitted by the base station in the first to seventh embodiments may include the cached data or information based on the cached data. The information based on the cached data may include information on a size of the data, a size of a packet required for transmission of the data. The information based on the cached data may include a modulation scheme required for transmission of the data. The information based on the cached data may include information on existence or non-existence of data addressed to the terminal,

The base station (access point) according to the present invention can be applied for the base station in the above-stated any embodiment. In the present embodiment, although the base station with the cache function is described, a terminal (STA) with the cache function can also be realized by the same block configuration as FIG. 17. In this case, the wired I/F 405 may be omitted. The transmission, by the terminal, of the frame, the data or the packet used in the any embodiment may be carried out based on the cached data stored in the memory 406. Also, information obtained based on the frame, the data or the packet received by the terminal in the any embodiment may be cached in the memory 406. The frame transmitted by the terminal in the first embodiment may include the cached data or information based on the cached data. The information based on the cached data may include information on a size of the data, a size of a packet required for transmission of the data. The information based on the cached data may include a modulation scheme required for transmission of the data. The information based on the cached data may include information on existence or non-existence of data addressed to the terminal.

### (Fourth Embodiment)

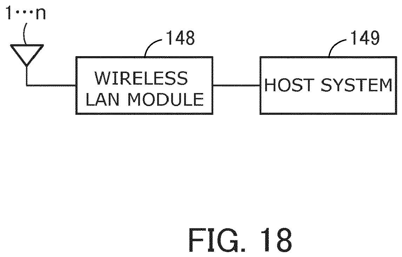

FIG. 18 shows an example of entire configuration of a terminal (WLAN terminal) or a base station. The example of configuration is just an example, and the present embodiment is not limited to this. The terminal or the base station includes one or a plurality of antennas 1 to n (n is an integer equal to or greater than 1), a wireless LAN module 148, and a host system 149. The wireless LAN module 148 corresponds to the wireless communication device according to the first embodiment. The wireless LAN module 148 includes a host interface and is connected to the host system 149 through the host interface. Other than the connection to the host system 149 through the connection cable, the wireless LAN module 148 may be directly connected to the host system 149. The wireless LAN module 148 can be mounted on a substrate by soldering or the like and can be connected to the host system 149 through wiring of the substrate. The host system 149 uses the wireless LAN module 148 and the antennas 1 to n to communicate with external apparatuses according to an arbitrary communication protocol. The communication protocol may include the TCP/IP and a protocol of a layer higher than that. Alternatively, the TCP/IP may be mounted on the wireless LAN module 148, and the host system 149 may execute only a protocol in a layer higher than that. In this case, the configuration of the host system 149 can be simplified. Examples of the present terminal include a mobile terminal, a TV, a digital camera, a wearable device, a tablet, a smartphone, a game device, a network storage device, a monitor, a digital audio player, a Web camera, a video camera, a projector, a navigation system, an external adaptor, an internal adaptor, a set top box, a gateway, a printer server, a mobile access point, a router, an enterprise/service provider access point, a portable device, a hand-held device, a vehicle and so on.

The wireless LAN module 148 (or the wireless communication device) may have functions of other wireless communication standards such as LTE (Long Term Evolution), LTE-Advanced (standards for mobile phones) as well as the IEEE802.11.

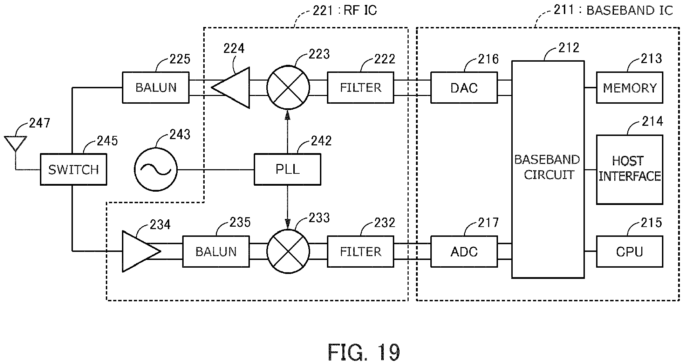

FIG. 19 shows an example of hardware configuration of a WLAN module. The configuration shown in the figure may be applied for each case in where the wireless communication device is mounted in non-AP terminal or in AP (Access Point) provided correspondingly to each function. That is, the configuration can be applied as specific examples of the wireless communication device as described in the above-stated any embodiment. In the configuration shown in figure, at least one antenna 247 is included although a plurality of antennas are included. In this case, a plurality of sets of a transmission system (216 and 222 to 225), a reception system (217, 232 to 235), a PLL 242, a crystal oscillator (reference signal source) 243, and a switch 245 may be arranged according to the antennas, and each set may be connected to a control circuit 212. One or both of the PLL 242 and the crystal oscillator 243 correspond to an oscillator according to the present embodiment.

The wireless LAN module (wireless communication device) includes a baseband IC (Integrated Circuit) 211, an RF (Radio Frequency) IC 221, a balun 225, the switch 245, and the antenna 247.

The baseband IC 211 includes the baseband circuit (control circuit) 212, a memory 213, a host interface 214, a CPU 215, a DAC (Digital to Analog Converter) 216, and an ADC (Analog to Digital Converter) 217.

The baseband IC 211 and the RF IC 221 may be formed on the same substrate. The baseband IC 211 and the RF IC 221 may be formed by one chip. Both or one of the DAC 216 and the ADC 217 may be arranged on the RF IC 221 or may be arranged on another IC. Both or one of the memory 213 and the CPU 215 may be arranged on an IC other than the baseband IC.

The memory 213 stores data to be transferred to and from the host system. The memory 213 also stores one or both of information to be transmitted to the terminal or the base station and information transmitted from the terminal or the base station. The memory 213 may also store a program required for the execution of the CPU 215 and may be used as a work area for the CPU 215 to execute the program. The memory 213 may be a volatile memory, such as an SRAM or a DRAM, or may be a non-volatile memory, such as a NAND or an MRAM.

The host interface 214 is an interface for connection to the host system. The interface can be anything, such as UART, SPI, SDIO, USB, or PCI Express.

The CPU 215 is a processor that executes a program to control the baseband circuit 212. The baseband circuit 212 mainly executes a process of the MAC layer and a process of the physical layer. One or both of the baseband circuit 212 and the CPU 215 correspond to the communication control apparatus that controls communication, the controller that controls communication, or controlling circuitry that controls communication.

At least one of the baseband circuit 212 or the CPU 215 may include a clock generator that generates a clock and may manage internal time by the clock generated by the clock generator.

For the process of the physical layer, the baseband circuit 212 performs addition of the physical header, coding, encryption, modulation process (which may include MIMO modulation), and the like of the frame to be transmitted and generates, for example, two types of digital baseband signals (hereinafter, "digital I signal" and "digital Q signal").

The DAC 216 performs DA conversion of signals input from the baseband circuit 212. More specifically, the DAC 216 converts the digital I signal to an analog I signal and converts the digital Q signal to an analog Q signal. Note that a single system signal may be transmitted without performing quadrature modulation. When a plurality of antennas are included, and single system or multi-system transmission signals equivalent to the number of antennas are to be distributed and transmitted, the number of provided DACs and the like may correspond to the number of antennas.

The RF IC 221 is, for example, one or both of an RF analog IC and a high frequency IC. The RF IC 221 includes a filter 222, a mixer 223, a preamplifier (PA) 224, the PLL (Phase Locked Loop) 242, a low noise amplifier (LNA) 234, a balun 235, a mixer 233, and a filter 232. Some of the elements may be arranged on the baseband IC 211 or another IC. The filters 222 and 232 may be bandpass filters or low pass filters.

The filter 222 extracts a signal of a desired band from each of the analog I signal and the analog Q signal input from the DAC 216. The PLL 242 uses an oscillation signal input from the crystal oscillator 243 and performs one or both of division and multiplication of the oscillation signal to thereby generate a signal at a certain frequency synchronized with the phase of the input signal. Note that the PLL 242 includes a VCO (Voltage Controlled Oscillator) and uses the VCO to perform feedback control based on the oscillation signal input from the crystal oscillator 243 to thereby obtain the signal at the certain frequency. The generated signal at the certain frequency is input to the mixer 223 and the mixer 233. The PLL 242 is equivalent to an example of an oscillator that generates a signal at a certain frequency.

The mixer 223 uses the signal at the certain frequency supplied from the PLL 242 to up-convert the analog I signal and the analog Q signal passed through the filter 222 into a radio frequency. The preamplifier (PA) amplifies the analog I signal and the analog Q signal at the radio frequency generated by the mixer 223, up to desired output power. The balun 225 is a converter for converting a balanced signal (differential signal) to an unbalanced signal (single-ended signal). Although the balanced signal is handled by the RF IC 221, the unbalanced signal is handled from the output of the RF IC 221 to the antenna 247. Therefore, the balun 225 performs the signal conversions.

The switch 245 is connected to the balun 225 on the transmission side during the transmission and is connected to the LNA 234 or the RF IC 221 on the reception side during the reception. The baseband IC 211 or the RF IC 221 may control the switch 245. There may be another circuit that controls the switch 245, and the circuit may control the switch 245.

The analog I signal and the analog Q signal at the radio frequency amplified by the preamplifier 224 are subjected to balanced-unbalanced conversion by the balun 225 and are then emitted as radio waves to the space from the antenna 247.

The antenna 247 may be a chip antenna, may be an antenna formed by wiring on a printed circuit board, or may be an antenna formed by using a linear conductive element.

The LNA 234 in the RF IC 221 amplifies a signal received from the antenna 247 through the switch 245 up to a level that allows demodulation, while maintaining the noise low. The balun 235 performs unbalanced-balanced conversion of the signal amplified by the low noise amplifier (LNA) 234. The mixer 233 uses the signal at the certain frequency input from the PLL 242 to down-convert, to a baseband, the reception signal converted to a balanced signal by the balun 235. More specifically, the mixer 233 includes a unit that generates carrier waves shifted by a phase of 90 degrees based on the signal at the certain frequency input from the PLL 242. The mixer 233 uses the carrier waves shifted by a phase of 90 degrees to perform quadrature demodulation of the reception signal converted by the balun 235 and generates an I (In-phase) signal with the same phase as the reception signal and a Q (Quad-phase) signal with the phase delayed by 90 degrees. The filter 232 extracts signals with desired frequency components from the I signal and the Q signal. Gains of the I signal and the Q signal extracted by the filter 232 are adjusted, and the I signal and the Q signal are output from the RF IC 221.

The ADC 217 in the baseband IC 211 performs AD conversion of the input signal from the RF IC 221. More specifically, the ADC 217 converts the I signal to a digital I signal and converts the Q signal to a digital Q signal. Note that a single system signal may be received without performing quadrature demodulation.

When a plurality of antennas are provided, the number of provided ADCs may correspond to the number of antennas. Based on the digital I signal and the digital Q signal, the baseband circuit 212 executes a process of the physical layer and the like, such as demodulation process, error correcting code process, and process of physical header, and obtains a frame. The baseband circuit 212 applies a process of the MAC layer to the frame. Note that the baseband circuit 212 may be configured to execute a process of TCP/IP when the TCP/IP is implemented.

Processing of the self-interference canceller 24 and the controller 25 in FIG. 6 is carried out in the baseband circuit 212 as one example. A circuit performing functions of the self-interference canceller 24 may be arranged in the RF IC 221 side.

### (Fifth Embodiment)

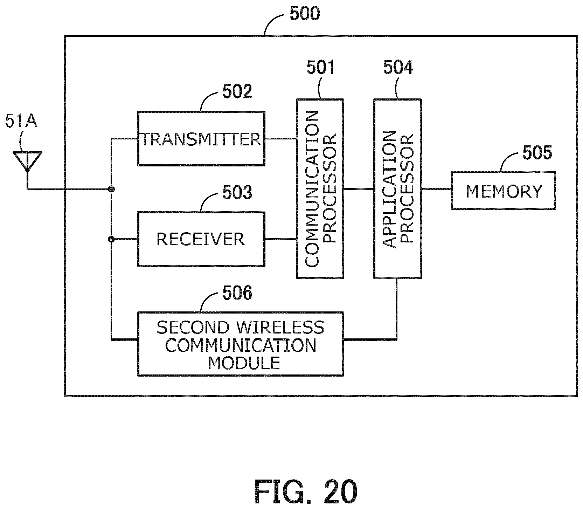

FIG. 20 is a functional block diagram of the terminal (STA) 500 according to a fourth embodiment. The STA 500 includes a communication processor 501, a transmitter 502, a receiver 503, an antenna 51A, an application processor 504 a memory505, and a second wireless communication module506. The base station (AP) may have the similar configuration.

The communication processor 501 has the functions similar to the controller as described in the first embodiment. The transmitter 502 and the receiver 503 have the functions similar to the transmitter and the receiver as described in the first embodiment. The transmitter 502 and the receiver 503 may perform analog domain processing in the transmitter and the receiver as described in the first embodiment and the communication processor 501 may perform digital domain processing in the transmitter and the receiver as described in the first embodiment. The communication processor 501 may internally possess a buffer for transferring data to and from the application processor 504. The buffer may be a volatile memory, such as an SRAM or a DRAM, or may be a non-volatile memory, such as a NAND or an MRAM.

The application processor 504 performs wireless communication through the communication processor 501, data writing or reading with the memory 505 and wireless communication through the second wireless communication module 506. The application processor 504 performs various processing such as Web browsing or multimedia processing of video or music or the like. The operation of application processor 504 may be carried out by software (program) processing by a processor such as CPU, by hardware, or both of them.

The memory 505 saves data received at the receiver 503 or the second wireless communication module 506, or data processed by the application processor 504. The memory 505 may be a volatile memory such as a DRAM or may be a non-volatile memory, such as a NAND or an MRAM. The memory 505 may be an SSD, an HDD, an SD card, or an eMMC or the like. The memory 505 may be arranged out of the access point 500.

The second wireless communication module 506 has the similar configuration to the WLAN module as shown in FIG. 18 or FIG. 19 as one example. The second wireless communication module 506 performs wireless communication in a different manner than that realized by the communication processor 501, the transmitter 502 and the receiver 503. For example, in a case that the communication processor 501, the transmitter 502 and the receiver 503 perform wireless communication in compliance with IEEE802.11 standard, the second wireless communication module 506 may perform wireless communication in compliance with another wireless communication standard such as Bluetooth (trademark), LTE, Wireless HD or the like. The communication processor 501, the transmitter 502, the receiver 503 may perform wireless communication at 2.4GHz/5GHz and the second wireless communication module 506 may perform wireless communication at 60GHz.

In the embodiment, one antenna is arranged and shared by the transmitter 502, the receiver 503 and the second wireless communication module 506. A switch controlling for connection destination of the antenna 51A may be arranged and thereby the antenna may be shared. A plurality of antennas may be arranged and may be employed by the transmitter 502, the receiver 503, and the second wireless communication module 506, respectively.

As one example, the communication processor 501 corresponds to an integrated circuit, and the transmitter 502 and the receiver 503 corresponds to an RF integrated circuit which transmits and receives frames. A set of the communication processor 501 and the application processor 504 is configured by one integrated circuit (1 chip). A part of the second wireless communication module 506 and the application processor 504 may be configured by one integrated circuit (1 chip).

The application processor performs control of wireless communication through the communication processor 501 and wireless communication through the second wireless communication module 506.

### (Sixth Embodiment)

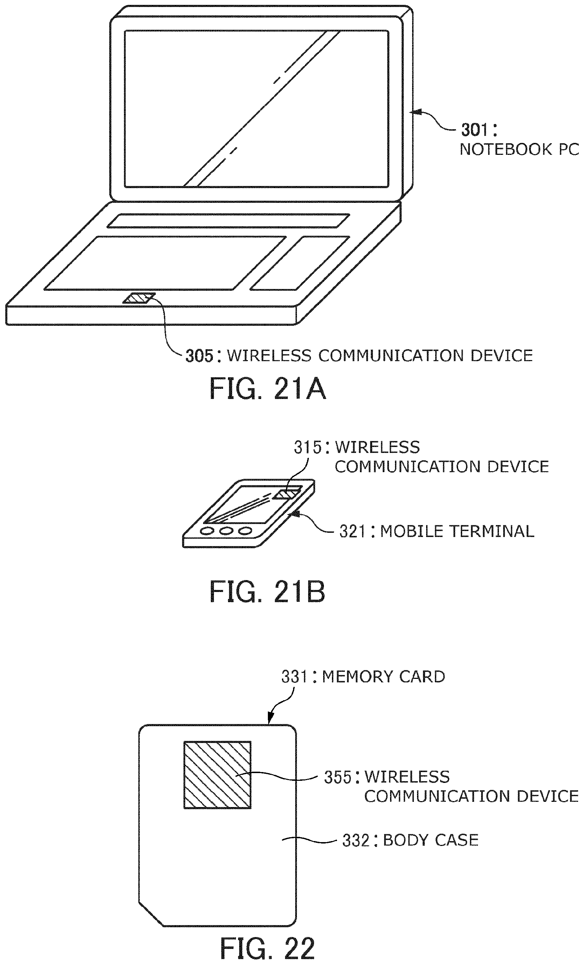

FIG. 21A and FIG. 21B are perspective views of wireless terminal according to the third embodiment. The wireless terminal in FIG. 21A is a notebook PC 301 and the wireless communication device (or a wireless device) in FIG. 21B is a mobile terminal 321. Each of them corresponds to one form of a terminal (which may indicate a base station). The notebook PC 301 and the mobile terminal 321 are equipped with wireless communication devices 305 and 315, respectively. The wireless communication device provided in a terminal (which may indicate a base station) which has been described above can be used as the wireless communication devices 305 and 315. A wireless terminal carrying a wireless communication device is not limited to notebook PCs and mobile terminals. For example, it can be installed in a TV, a digital camera, a wearable device, a tablet, a smart phone, a gaming device, a network storage device, a monitor, a digital audio player, a web camera, a video camera, a projector, a navigation system, an external adapter, an internal adapter, a set top box, a gateway, a printer server, a mobile access point, a router, an enterprise/service provider access point, a portable device, a handheld device, a vehicle and so on.

Moreover, a wireless communication device installed in a terminal (which may indicate a base station) can also be provided in a memory card. FIG. 22 illustrates an example of a wireless communication device mounted on a memory card. A memory card 331 contains a wireless communication device 355 and a body case 332. The memory card 331 uses the wireless communication device 355 for wireless communication with external devices. Here, in FIG. 22, the description of other installed elements (for example, a memory, and so on) in the memory card 331 is omitted.

### (Seventh Embodiment)

In the present embodiment, a bus, a processor unit and an external interface unit are provided in addition to the configuration of the wireless communication device (the wireless communication device of the terminal (which may indicate the base station)) according to any of the above embodiments. The processor unit and the external interface unit are connected with an external memory (a buffer) through the bus. A firmware operates the processor unit. Thus, by adopting a configuration in which the firmware is included in the wireless communication device, the functions of the wireless communication device can be easily changed by rewriting the firmware. The processing unit in which the firmware operates may be a processor that performs the process of the communication controlling device or the control unit according to the present embodiment, or may be another processor that performs a process relating to extending or altering the functions of the process of the communication controlling device or the control unit. The processing unit in which the firmware operates may be included in the access point or the wireless terminal according to the present embodiment. Alternatively, the processing unit may be included in the integrated circuit of the wireless communication device installed in the access point, or in the integrated circuit of the wireless communication device installed in the wireless terminal.

### (Eighth Embodiment)

In the present embodiment, a clock generating unit is provided in addition to the configuration of the wireless communication device (the wireless communication device of the terminal (which may indicate the base station)) according to any of the above embodiments. The clock generating unit generates a clock and outputs the clock from an output terminal to the exterior of the wireless communication device. Thus, by outputting to the exterior the clock generated inside the wireless communication device and operating the host by the clock output to the exterior, it is possible to operate the host and the wireless communication device in a synchronized manner.

### (Ninth Embodiment)

In the present embodiment, a power source unit, a power source controlling unit and a wireless power feeding unit are included in addition to the configuration of the wireless communication device (the wireless communication device of the terminal (which may indicate the base station)) according to any of the above embodiments. The power supply controlling unit is connected to the power source unit and to the wireless power feeding unit, and performs control to select a power source to be supplied to the wireless communication device. Thus, by adopting a configuration in which the power source is included in the wireless communication device, power consumption reduction operations that control the power source are possible.

### (Tenth Embodiment)

In the present embodiment, a SIM card is added to the configuration of the wireless communication device according to any of the above embodiments. For example, the SIM card is connected with the controller, the transmitter, the receiver or plural of them in the wireless communication device. Thus, by adopting a configuration in which the SIM card is included in the wireless communication device, authentication processing can be easily performed.

### (Eleventh Embodiment)

In the eighth embodiment, a video image compressing/decompressing unit is added to the configuration of the wireless communication device according to any of the above embodiments. The video image compressing/decompressing unit is connected to the bus. Thus, by adopting a configuration in which the video image compressing/decompressing unit is included in the wireless communication device, transmitting a compressed video image and decompressing a received compressed video image can be easily done.

### (Twelfth Embodiment)

In the present embodiment, an LED unit is added to the configuration of the wireless communication device (the wireless communication device of the terminal (which may indicate the base station)) according to any of the above embodiments. For example, the LED unit is connected to the controller, the transmitter, the receiver or plural of them in the wireless communication device. Thus, by adopting a configuration in which the LED unit is included in the wireless communication device, notifying the operation state of the wireless communication device to the user can be easily done.

### (Thirteenth Embodiment)

In the present embodiment, a vibrator unit is included in addition to the configuration of the wireless communication device wireless communication device (the wireless communication device of the terminal (which may indicate the base station)) according to any of the above embodiments. For example, the vibrator unit is connected to at least one of the controller, the transmitter, the receiver or plural of them in the wireless communication device. Thus, by adopting a configuration in which the vibrator unit is included in the wireless communication device, notifying the operation state of the wireless communication device to the user can be easily done.

### (Fourteenth embodiment)

In the present embodiment, the configuration of the wireless communication device includes a display in addition to the configuration of the wireless communication device (the wireless communication device of the terminal (which may indicate the base station)) according to any one of the above embodiments. The display may be connected to the controller, the transmitter, the receiver or plural of them in the wireless communication device via a bus (not shown). As seen from the above, the configuration including the display to display the operation state of the wireless communication device on the display allows the operation status of the wireless communication device to be easily notified to a user.

### (Fifteenth Embodiment)

In the present embodiment, [1] the frame type in the wireless communication system, [2] a technique of disconnection between wireless communication devices, [3] an access scheme of a wireless LAN system and [4] a frame interval of a wireless LAN are described.

### [1] Frame type in communication system

Generally, as mentioned above, frames treated on a wireless access protocol in a wireless communication system are roughly divided into three types of the data frame, the management frame and the control frame. These types are normally shown in a header part which is commonly provided to frames. As a display method of the frame type, three types may be distinguished in one field or may be distinguished by a combination of two fields. In IEEE 802.11 standard, identification of a frame type is made based on two fields of Type and Subtype in the Frame Control field in the header part of the MAC frame. The Type field is one for generally classifying frames into a data frame, a management frame, or a control frame and the Subtype field is one for identifying more detailed type in each of the classified frame types such as a beacon frame belonging to the management frame.

The management frame is a frame used to manage a physical communication link with a different wireless communication device. For example, there are a frame used to perform communication setting with the different wireless communication device or a frame to release communication link (that is, to disconnect the connection), and a frame related to the power save operation in the wireless communication device.

The data frame is a frame to transmit data generated in the wireless communication device to the different wireless communication device after a physical communication link with the different wireless communication device is established. The data is generated in a higher layer of the present embodiment and generated by, for example, a user's operation.

The control frame is a frame used to perform control at the time of transmission and reception (exchange) of the data frame with the different wireless communication device. A response frame transmitted for the acknowledgment in a case where the wireless communication device receives the data frame or the management frame, belongs to the control frame. The response frame is, for example, an ACK frame or a BlockACK frame. The RTS frame and the CTS frame are also the control frame.

These three types of frames are subjected to processing based on the necessity in the physical layer and then transmitted as physical packets via an antenna. In IEEE 802.11 standard (including the extended standard such as IEEE Std 802.11ac-2013), an association process is defined as one procedure for connection establishment. The association request frame and the association response frame which are used in the procedure are a management frame. Since the association request frame and the association response frame is the management frame transmitted in a unicast scheme, the frames causes the wireless communication terminal in the receiving side to transmit an ACK frame being a response frame. The ACK frame is a control frame as described in the above.

### [2] Technique of disconnection between wireless communication devices

For disconnection of the connection (release), there are an explicit technique and an implicit technique. As the explicit technique, a frame to disconnect any one of the connected wireless communication devices is transmitted. This frame corresponds to Deauthentication frame defined in IEEE 802.11 standard and is classified into the management frame. Normally, it is determined that the connection is disconnected at the timing of transmitting the frame to disconnect the connection in a wireless communication device on the side to transmit the frame and at the timing of receiving the frame to disconnect the connection in a wireless communication device on the side to receive the frame. Afterward, it returns to the initial state in a communication phase, for example, a state to search for a wireless communication device of the communicating partner. In a case that the wireless communication base station disconnects with a wireless communication terminal, for example, the base station deletes information on the wireless communication device from a connection management table if the base station holds the connection management table for managing wireless communication terminals which entries into the BSS of the base station-self. For example, in a case that the base station assigns an AID to each wireless communication terminal which entries into the BSS at the time when the base station permitted each wireless communication terminal to connect to the base station-self in the association process, the base station deletes the held information related to the AID of the wireless communication terminal disconnected with the base station and may release the AID to assign it to another wireless communication device which newly entries into the BSS.

On the other hand, as the implicit technique, it is determined that the connection state is disconnected in a case where frame transmission (transmission of a data frame and management frame or transmission of a response frame with respect to a frame transmitted by the subject device) is not detected from a wireless communication device of the connection partner which has established the connection for a certain period. Such a technique is provided because, in a state where it is determined that the connection is disconnected as mentioned above, a state is considered where the physical wireless link cannot be secured, for example, the communication distance to the wireless communication device of the connection destination is separated and the radio signals cannot be received or decoded. That is, it is because the reception of the frame to disconnect the connection cannot be expected.

As a specific example to determine the disconnection of connection in an implicit method, a timer is used. For example, at the time of transmitting a data frame that requests an acknowledgment response frame, a first timer (for example, a retransmission timer for a data frame) that limits the retransmission period of the frame is activated, and, if the acknowledgement response frame to the frame is not received until the expiration of the first timer (that is, until a desired retransmission period passes), retransmission is performed. When the acknowledgment response frame to the frame is received, the first timer is stopped.

On the other hand, when the acknowledgment response frame is not received and the first timer expires, for example, a management frame to confirm whether a wireless communication device of a connection partner is still present (in a communication range) (in other words, whether a wireless link is secured) is transmitted, and, at the same time, a second timer (for example, a retransmission timer for the management frame) to limit the retransmission period of the frame is activated. Similarly to the first timer, even in the second timer, retransmission is performed if an acknowledgment response frame to the frame is not received until the second timer expires, and it is determined that the connection is disconnected when the second timer expires.

Alternatively, a third timer is activated when a frame is received from a wireless communication device of the connection partner, the third timer is stopped every time the frame is newly received from the wireless communication device of the connection partner, and it is activated from the initial value again. When the third timer expires, similarly to the above, a management frame to confirm whether the wireless communication device of the connection party is still present (in a communication range) (in other words, whether a wireless link is secured) is transmitted, and, at the same time, a second timer (for example, a retransmission timer for the management frame) to limit the retransmission period of the frame is activated. Even in this case, retransmission is performed if an acknowledgment response frame to the frame is not received until the second timer expires, and it is determined that the connection is disconnected when the second timer expires. The latter management frame to confirm whether the wireless communication device of the connection partner is still present may differ from the management frame in the former case. Moreover, regarding the timer to limit the retransmission of the management frame in the latter case, although the same one as that in the former case is used as the second timer, a different timer may be used.

### [3] Access scheme of wireless LAN system

For example, there is a wireless LAN system with an assumption of communication or competition with a plurality of wireless communication devices. CSMA/CA is set as the basis of an access scheme in IEEE802.11 (including an extension standard or the like) wireless LAN. In a scheme in which transmission by a certain wireless communication device is grasped and transmission is performed after a fixed time from the transmission end, simultaneous transmission is performed in the plurality of wireless communication devices that grasp the transmission by the wireless communication device, and, as a result, radio signals collide and frame transmission fails. By grasping the transmission by the certain wireless communication device and waiting for a random time from the transmission end, transmission by the plurality of wireless communication devices that grasp the transmission by the wireless communication device stochastically disperses. Therefore, if the number of wireless communication devices in which the earliest time in a random time is subtracted is one, frame transmission by the wireless communication device succeeds and it is possible to prevent frame collision. Since the acquisition of the transmission right based on the random value becomes impartial between the plurality of wireless communication devices, it can say that a scheme adopting Collision Avoidance is a suitable scheme to share a radio medium between the plurality of wireless communication devices.

### [4] Frame interval of wireless LAN

The frame interval of IEEE802.11 wireless LAN is described. There are several types of frame intervals used in IEEE802.11 wireless LAN, such as distributed coordination function interframe space (DIFS), arbitration interframe space (AIFS), point coordination function interframe space (PIFS), short interframe space (SIFS), extended interframe space (EIFS) and reduced interframe space (RIFS).

The definition of the frame interval is defined as a continuous period that should confirm and open the carrier sensing idle before transmission in IEEE802.11 wireless LAN, and a strict period from a previous frame is not discussed. Therefore, the definition is followed in the explanation of IEEE802.11 wireless LAN system. In IEEE802.11 wireless LAN, a waiting time at the time of random access based on CSMA/CA is assumed to be the sum of a fixed time and a random time, and it can say that such a definition is made to clarify the fixed time.

DIFS and AIFS are frame intervals used when trying the frame exchange start in a contention period that competes with other wireless communication devices on the basis of CSMA/CA. DIFS is used in a case where priority according to the traffic type is not distinguished, AIFS is used in a case where priority by traffic identifier (TID) is provided.

Since operation is similar between DIFS and AIFS, an explanation below will mainly use AIFS. In IEEE802.11 wireless LAN, access control including the start of frame exchange in the MAC layer is performed. In addition, in a case where QoS (Quality of Service) is supported when data is transferred from a higher layer, the traffic type is notified together with the data, and the data is classified for the priority at the time of access on the basis of the traffic type. The class at the time of this access is referred to as "access category (AC)". Therefore, the value of AIFS is provided every access category.

PIFS denotes a frame interval to enable access which is more preferential than other competing wireless communication devices, and the period is shorter than the values of DIFS and AIFS. SIFS denotes a frame interval which can be used in a case where frame exchange continues in a burst manner at the time of transmission of a control frame of a response system or after the access right is acquired once. EIFS denotes a frame interval caused when frame reception fails (when the received frame is determined to be error).

RIFS denotes a frame interval which can be used in a case where a plurality of frames are consecutively transmitted to the same wireless communication device in a burst manner after the access right is acquired once, and a response frame from a wireless communication device of the transmission partner is not requested while RIFS is used.

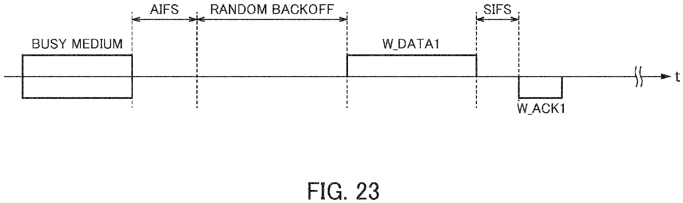

Here, FIG. 23 illustrates one example of frame exchange in a competitive period based on the random access in IEEE802.11 wireless LAN.

When a transmission request of a data frame (W_DATA1) is generated in a certain wireless communication device, a case is assumed where it is recognized that a medium is busy (busy medium) as a result of carrier sensing. In this case, AIFS of a fixed time is set from the time point at which the carrier sensing becomes idle, and, when a random time (random backoff) is set afterward, data frame W_DATA1 is transmitted to the communicating partner.

The random time is acquired by multiplying a slot time by a pseudorandom integer led from uniform distribution between contention windows (CW) given by integers from 0. Here, what multiplies CW by the slot time is referred to as "CW time width". The initial value of CW is given by CWmin, and the value of CW is increased up to CWmax every retransmission. Similarly to AIFS, both CWmin and CWmax have values every access category. In a wireless communication device of transmission destination of W_DATA1, when reception of the data frame succeeds, a response frame (W_ACK1) is transmitted after SIFS from the reception end time point. If it is within a transmission burst time limit when W_ACK1 is received, the wireless communication device that transmits W_DATA1 can transmit the next frame (for example, W_DATA2) after SIFS.

Although AIFS, DIFS, PIFS and EIFS are functions between SIFS and the slot-time, SIFS and the slot time are defined every physical layer. Moreover, although parameters whose values being set according to each access category, such as AIFS, CWmin and CWmax, can be set independently by a communication group (which is a basic service set (BSS) in IEEE802.11 wireless LAN), the default values are defined.

For example, in the definition of 802.11ac, with an assumption that SIFS is 16 µs and the slot time is 9 µs, and thereby PIFS is 25 µs, DIFS is 34 µs, the default value of the frame interval of an access category of BACKGROUND (AC_BK) in AIFS is 79 µs, the default value of the frame interval of BEST EFFORT (AC_BE) is 43 µs, the default value of the frame interval between VIDEO(AC_VI) and VOICE(AC_VO) is 34 µs, and the default values of CWmin and CWmax are 31 and 1023 in AC_BK and AC_BE, 15 and 31 in AC_VI and 7 and 15 in AC_VO. Here, EIFS denotes the sum of SIFS, DIFS, and the time length of a response frame transmitted at the lowest mandatory physical rate. In the wireless communication device which can effectively takes EIFS, it may estimate an occupation time length of a PHY packet conveying a response frame directed to a PHY packet due to which the EIFS is caused and calculates a sum of SIFS, DIFS and the estimated time to take the EIFS.

Note that the frames described in the embodiments may indicate not only things called frames in, for example, IEEE 802.11 standard, but also things called packets, such as Null Data Packets.

The terms used in each embodiment should be interpreted broadly. For example, the term "processor" may encompass a general purpose processor, a central processing unit (CPU), a microprocessor, a digital signal processor (DSP), a controller, a microcontroller, a state machine, and so on. According to circumstances, a "processor" may refer to an application specific integrated circuit (ASIC), a field programmable gate array (FPGA), and a programmable logic device (PLD), etc. The term "processor" may refer to a combination of processing devices such as a plurality of microprocessors, a combination of a DSP and a microprocessor, or one or more microprocessors in conjunction with a DSP core.

As another example, the term "memory" may encompass any electronic component which can store electronic information. The "memory" may refer to various types of media such as a random access memory (RAM), a read-only memory (ROM), a programmable read-only memory (PROM), an erasable programmable read only memory (EPROM), an electrically erasable PROM (EEPROM), a non-volatile random access memory (NVRAM), a flash memory, and a magnetic or optical data storage, which are readable by a processor. It can be said that the memory electronically communicates with a processor if the processor read and/or write information for the memory. The memory may be arranged within a processor and also in this case, it can be said that the memory electronically communication with the processor. The circuitry" may refer one or more electric circuits disposed on a single chip, or may refer one or more electric circuits disposed on a plurality of chips or a plurality of devices in a dispersed manner.

In the specification, the expression "at least one of a, b or c" is an expression to encompass not only "a", "b", "c", "a and b", "a and c", "b and c", "a, b and c" or any combination thereof but also a combination of at least a plurality of same elements such as "a and a", "a, b and b" or "a, a, b, b, c and c". Also, the expression is an expression to allow a set including an element other than "a", "b" and "c" such as "a, b, c, and d".

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions.

### [Clauses]

1. A wireless communication device comprising:
   a receiver configured to receive a first packet including a first information and, after reception of the first packet, receive a second packet in a predetermined frequency band; and
   a transmitter configured to transmit a third packet in the predetermined frequency band simultaneously with reception of the second packet with a transmission power equal to or less than a maximum transmission power based on the first information.
2. The wireless communication device according to clause 1, wherein the receiver is configured to receive the second packet at a predetermined timing after the reception of the first packet, and the transmitter is configured to transmit the third packet at the predetermined timing.
3. The wireless communication device according to clause 1 or 2, wherein the first information includes information associated with at least one of a transmission rate of the second packet or a transmission power of the second packet.
4. The wireless communication device according to clause 3 further comprising controlling circuitry configured to
   determine the transmission rate of the second packet and reception power of the second packet on the basis of the first information, and
   determine the maximum transmission power on the basis of a first reception quality required for reception of a packet applied with the transmission rate, a value of the reception power, and a self-interference cancellation capability, the self-interference cancellation capability indicating a cancellable amount of a self-interference amount given to a reception signal of the second packet due to a transmission signal of the third packet.
5. The wireless communication device according to any one of clauses 1 to 4, wherein the controlling circuitry is configured to determine at least one of a transmission destination terminal of the third packet or a transmission rate of the third packet on the basis of a value of the maximum transmission power.
6. The wireless communication device according to any one of clauses 1 to 5, further comprising controlling circuitry configured to determine whether to transmit the third packet simultaneously with the reception of the second packet on the basis of the first information, wherein
   the transmitter is configured not to transmit the third packet simultaneously with the reception of the second packet in response to the third packet being determined not to be transmitted.
7. The wireless communication device according to clause 6, wherein the controlling circuitry is configured to determine the maximum transmission power on the basis of the first information, and configured to determine not to transmit the third packet when there is no terminal to which transmission with a power equal to or less than the maximum transmission power is allowed.
8. The wireless communication device according to any one of clauses 1 to 7, further comprising at least one antenna.
9. A wireless communication device comprising:
   a transmitter configured to transmit a first packet including a first information; and
   a receiver configured to receive, after transmission of the first packet, a second packet in a predetermined frequency band, the second packet being transmitted with a transmission power based on the first information, wherein
   the transmitter is configured to transmit a third packet in the predetermined frequency band simultaneously with reception of the second packet, with a transmission power equal to or less than a maximum transmission power allowed to receive the second packet with a first reception quality.
10. The wireless communication device according to clause 9, wherein the receiver is configured to receive the second packet at a predetermined timing after the transmission of the first packet, and the transmitter is configured to transmit the third packet at the predetermined timing.
11. The wireless communication device according to clause 9 or 10, wherein the first information includes information associated with at least one of a transmission rate of the second packet or a transmission power of the second packet.
12. The wireless communication device according to any oen of clauses 9 to 11, further comprising controlling circuitry configured to
   determine the transmission rate of the second packet and the reception power required for receiving the second packet with the first reception quality and generate the first information on the basis of the transmission rate and the reception power, and
   determine the maximum transmission power on the basis of the first reception quality, a value of the reception power, and a self-interference cancellation capability, the self-interference cancellation capability indicating a cancellable amount of a self-interference amount given to a reception signal of the second packet due to a transmission signal of the third packet.
13. The wireless communication device according to clause 12, wherein the controlling circuitry is configured to determine at least one of a transmission destination terminal of the third packet or a transmission rate of the third packet on the basis of a value of the maximum transmission power.
14. The wireless communication device according to any one of clauses 9 to 13, further comprising controlling circuitry configured to determine whether to transmit the third packet simultaneously with the reception of the second packet on the basis of the first information, wherein
   the transmitter is not to transmit the third packet simultaneously with the reception of the second packet in response to the third packet being determined not to be transmitted.
15. The wireless communication device according to clause 14, wherein the controlling circuitry is configured to determine the maximum transmission power on the basis of the first information, and configured to determine not to transmit the third packet when there is no terminal to which transmission with a power equal to or less than the maximum transmission power is allowed.
16. The wireless communication device according to any one of clauses 9 to 15, further comprising at least one antenna.
17. A wireless communication device comprising:
   controlling circuitry configured to determine a transmission power of a first packet and configured to determine, in accordance with the transmission power that has been determined, a reception power required for receiving a second packet with a first reception quality simultaneously with the first packet;
   a transmitter configured to transmit a third packet including a first information associated with the reception power; and
   a receiver configured to receive, after transmission of the third packet, the second packet depending on the first information in a predetermined frequency band, wherein
   the transmitter is configured to transmit the first packet simultaneously with the reception of the second packet, with the transmission power that has been determined, in the predetermined frequency band.
18. The wireless communication device according to clause 17, wherein the receiver is configured to receive the second packet at a predetermined timing after transmission of the third packet, and the transmitter is configured to transmit the first packet at the predetermined timing.
19. The wireless communication device according to clause 17 or 18, wherein the controlling circuitry is configured to calculate a self-interference amount given to a reception signal by a transmission signal applied with the transmission power on the basis of a value of the transmission power and a self-interference cancellation capability, and configured to determine a reception power required for receiving the second packet with the first reception quality on the basis of the self-interference amount and a transmission rate of the second packet.
20. A wireless communication device comprising a transmitter configured to transmit a first packet including a first information and, after transmission of the first packet, transmit a second packet in a predetermined frequency band with a transmission power depending on the first information,
   wherein a transmission timing of the second packet is same timing as transmission timings of the first packet and a third packet transmitted by a transmission destination device of the second packet.

## Claims

1. A wireless communication device comprising:
a receiver (23) configured to receive a first packet including a first information and, after reception of the first packet, receive a second packet in a predetermined frequency band; and
a transmitter (22) configured to transmit a third packet in the predetermined frequency band simultaneously with reception of the second packet with a transmission power equal to or less than a maximum transmission power based on the first information.

2. The wireless communication device according to claim 1, wherein the receiver (23) is configured to receive the second packet at a predetermined timing after the reception of the first packet, and the transmitter is configured to transmit the third packet at the predetermined timing.

3. The wireless communication device according to claim 1 or 2, wherein the first information includes information associated with at least one of a transmission rate of the second packet or a transmission power of the second packet.

4. The wireless communication device according to claim 3 further comprising controlling circuitry (25) configured to
determine the transmission rate of the second packet and reception power of the second packet on the basis of the first information, and
determine the maximum transmission power on the basis of a first reception quality required for reception of a packet applied with the transmission rate, a value of the reception power, and a self-interference cancellation capability, the self-interference cancellation capability indicating a cancellable amount of a self-interference amount given to a reception signal of the second packet due to a transmission signal of the third packet.

5. The wireless communication device according to any one of claims 1 to 4, wherein the controlling circuitry (25) is configured to determine at least one of a transmission destination terminal of the third packet or a transmission rate of the third packet on the basis of a value of the maximum transmission power.

6. The wireless communication device according to any one of claims 1 to 5 further comprising controlling circuitry (25) configured to determine whether to transmit the third packet simultaneously with the reception of the second packet on the basis of the first information, wherein
the transmitter is configured not to transmit the third packet simultaneously with the reception of the second packet in response to the third packet being determined not to be transmitted.

7. The wireless communication device according to claim 6, wherein the controlling circuitry (25) is configured to determine the maximum transmission power on the basis of the first information, and configured to determine not to transmit the third packet when there is no terminal to which transmission with a power equal to or less than the maximum transmission power is allowed.

8. The wireless communication device according to any one of claims 1 to 7, further comprising at least one antenna (21-1 to 21-N).

9. A wireless communication device comprising a transmitter (32) configured to transmit a first packet including a first information and, after transmission of the first packet, transmit a second packet in a predetermined frequency band with a transmission power depending on the first information,
wherein a transmission timing of the second packet is same timing as transmission timings of the first packet and a third packet transmitted by a transmission destination device of the second packet.

10. The wireless communication device according to claim 9 further comprising at least one antenna (31-1 to 31-N).

11. A wireless communication method comprising:
receiving a first packet including a first information and, after reception of the first packet, receive a second packet in a predetermined frequency band; and
transmitting a third packet in the predetermined frequency band simultaneously with reception of the second packet with a transmission power equal to or less than a maximum transmission power based on the first information.

12. A wireless communication method comprising:
transmitting a first packet including a first information and, after transmission of the first packet, transmit a second packet in a predetermined frequency band with a transmission power depending on the first information,
wherein a transmission timing of the second packet is same timing as transmission timings of the first packet and a third packet transmitted by a transmission destination device of the second packet.
